(19) **Europäisches Patentamt**
**European Patent Office**
**Office européen des brevets**

(11) **EP 4 657 726 A1**

(12) **EUROPEAN PATENT APPLICATION**

(43) Date of publication:
**03.12.2025 Bulletin 2025/49**

(21) Application number: **24178515.3**

(22) Date of filing: **28.05.2024**

(51) International Patent Classification (IPC):
*H02M 1/00* (2006.01)      *H02M 3/00* (2006.01)
*H02M 3/158* (2006.01)

(52) Cooperative Patent Classification (CPC):
**H02M 1/0074; H02M 1/0095; H02M 3/01;
H02M 3/158**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Infineon Technologies Austria AG
9500 Villach (AT)**

(72) Inventors:
• **MAZZER, Simone
9500 Villach (AT)**

• **SAGGINI, Stefano
33100 Udine (IT)**
• **RIZZOLATTI, Roberto
9523 Villach (AT)**
• **URSINO, Mario
9500 Villach (AT)**
• **DEBOY, Gerald Josef
9061 Klagenfurt (AT)**

(74) Representative: **Elkington and Fife LLP
Prospect House
8 Pembroke Road
Sevenoaks, Kent TN13 1XR (GB)**

(54) **POWER CONVERTER CIRCUITS**

(57)      A power converter circuit (100, 200) is disclosed. The power converter circuit includes: a first regulated power converter (110, 210) having a first input and a first output; and a second regulated power converter (120, 220) having a second input and a second output. The inputs are configured to be coupled to a source, and the outputs are configured to be coupled to a load. The inputs are coupled in series; the outputs are coupled in parallel. The first regulated power converter (110, 210) is a regulated hybrid converter configured to transfer energy from the first input to the first output through at least one magnetic component and at least one capacitive component.

**FIG. 1**

**EP 4 657 726 A1**

**Description**

FIELD

The present disclosure relates to power converter circuits, and more specifically, to methods and systems for load current sharing in power converter circuits.

BACKGROUND

The requirements for high-power electronic power supplies are becoming ever more demanding. For example, there is an ever-increasing desire for greater efficiency (lower losses). At the same time, in many applications, there is a desire for excellent transient performance. That is, the power supply should respond rapidly when there is a step change in load.

Modern datacentres represent one example of an application area where demands of these kinds are placed on power supplies. As artificial intelligence (AI) methods become more computationally intensive, the power demands of server computers in such data centres are increasing. Highly parallel architectures demand high current area density. Power supplies must handle large steps in load current gracefully. And as both power consumption and energy costs increase, there is demand for ever more efficient power supply designs.

Multi-phase converters offer several advantages in power conversion applications. By distributing the power conversion process across multiple phases, these converters can reduce the current load on individual components, which can lead to improvements in efficiency and thermal management. The use of multiple phases can also result in lower ripple currents, which can reduce the stress on passive components and enhance the overall reliability of the system. Furthermore, multi-phase converters can offer better performance in dynamic conditions, providing faster response to changes in load and input conditions. This can be particularly beneficial in systems where load conditions are variable and demand quick adjustments to maintain stable operation.

SUMMARY

A power converter circuit is disclosed. The power converter circuit includes: a first regulated power converter having a first input and a first output; and a second regulated power converter having a second input and a second output. The inputs are configured to be coupled to a source, and the outputs are configured to be coupled to a load. The inputs are coupled in series; the outputs are coupled in parallel. The first regulated power converter is a regulated hybrid converter configured to transfer energy from the first input to the first output through at least one magnetic component and at least one capacitive component.

According to one aspect, there is provided a power converter circuit comprising:

> a first regulated power converter having a first input and a first output; and
> a second regulated power converter having a second input and a second output,
> wherein the first input and the second input are configured to be coupled to a source, and the first output and the second output are configured to be coupled to a load;
> wherein the first input and the second input are coupled in series, such that a first average current supplied from the source to the first input is equal to a second average current supplied from the source to the second input,
> wherein the first output and the second output are coupled in parallel, such that a first voltage at the first output is equal to a second voltage at the second output,
> wherein the first regulated power converter is a regulated hybrid converter configured to transfer energy from the first input to the first output through at least one magnetic component and at least one capacitive component.

Power converter circuits according to examples may be less susceptible to imbalances caused by component tolerances and/or may be more amenable to control to compensate for such component tolerances.

The power converter circuit may be a voltage-source converter. The voltage may be a direct current (DC) voltage. The average current may be an average current over a switching cycle. The average current may be an average DC current.

In each regulated power converter, control parameters may be configured to adjust the converter conversion gain. The control parameters may include the duty cycle of a switching element at constant frequency, the switching frequency at constant on-time for a switching element, the switching frequency at constant off-time for a switching element, or the phase shift between two or more switching elements.

The switching element(s) in question may be a control switch of the power converter. Here, "control switch" refers to a switching element that controls the power delivered by the converter to the load. For example, an energy storage and transfer element, such as a capacitor or inductor, may be charged or energised during the on-time of the control switch. Not all switching elements in a power converter are control switches. For example, a switching element functioning as a synchronous rectifier is not a "control switch".

By controlling the conversion gain, an output voltage of that converter may be regulated against input voltage variations and output load variations. As a result of this compensating, a steady-state voltage supplied by the power converter to the load may be substantially constant. The power converter circuit may return to this steady-state output voltage after every change in the input voltage and/or output load, potentially after a transient deviation in output voltage - for example, when the change in the input voltage or output load is relatively sudden (relatively large and/or fast).

The first and second regulated power converters may be connected in an "input serial, output parallel" (ISOP) configuration.

Each regulated power converter may comprise one or more switching elements, operated in a switching cycle.

The first regulated power converter is a regulated hybrid converter. (Here, a "hybrid" converter refers to a converter that relies on both inductive and capacitive energy transfer.) In particular the first regulated power converter may be a hybrid pulse-width modulation/ resonant voltage converter (hereinafter "semi-resonant hybrid converter"), in which a resonance occurs during the off time of the high side or control switch. This converter can operate like a PWM converter for one interval of the switching cycle and can operate like a resonant converter for another interval of the switching cycle.

In some examples, the second regulated power converter may be a regulated pulse width modulated (PWM) converter. In other examples, the second regulated power converter may be a regulated hybrid converter, for example a semi-resonant hybrid converter.

The first regulated power converter may be configured to receive at the first input a first fraction of an input voltage supplied by the source. The second regulated power converter may be configured to receive at the second input a second fraction of the input voltage. (The first fraction and the second fraction may be less than one.) The second fraction may be smaller than the first fraction.

The at least one magnetic component may comprise or consist of at least one inductive component.

The power converter circuit may further comprise a controller. The controller may be configured to control the switching elements of the respective regulated power converters to operate in different phases. In particular, the controller may be configured to control the control switches of the respective regulated power converters to operate in different phases. For the avoidance of doubt, the "phases" referred to relate to partitions in time of an overall switching cycle of the power converter circuit. The controller may generate control signals for the switching elements (and, in particular, control switches) with a phase shift between them. The different phases may overlap. A phase-shift between successive phases (and control signals) - and, similarly, an overlap between successive phases - may depend on the number of regulated power converters and/or number of power converter circuits working together to form the multiphase converter. The phases may be evenly spaced, to help reduce a current ripple at the output. By "evenly spaced", it is meant that there may be a uniform phase shift between all successive phases.

The first regulated power converter may be may be configured to: during at least a first interval of a switching cycle, transfer energy from the source and store it at least in part as magnetic energy by any one of, or any combination of two or more of: (a) one or more inductors, (b) one or more coupled inductors, (c) a transformer, and (d) an autotransformer; and during a second interval of the switching cycle, transfer the magnetic energy to the load.

Note that the load may be powered (that is, energy may be transferred to the load) also during the first interval. In other words, during the first interval, the first regulated power converter may be configured to transfer first energy from the source and store it (at least in part as magnetic energy), and also transfer second energy from the source to the load.

A transformer may have multiple windings and may therefore provide galvanic isolation. An autotransformer has a single winding and does not provide galvanic isolation. The transformer/autotransformer may exhibit energy storage (in particular, substantial, non-negligible energy storage).

In some examples, the first interval and the second interval do not overlap. The at least one magnetic component, mentioned previously, may comprise said listed magnetic energy storage component(s).

The first regulated power converter may be configured to: during at least a third interval of the switching cycle, transfer energy from the source and store it at least in part as electric potential energy by one or more energy storage capacitors; and during a fourth interval of the switching cycle, transfer the electric potential energy to the load.

In some examples, the third interval and the fourth interval do not overlap. The third and fourth intervals may overlap with or coincide with the first and second intervals, respectively. By "coincide" it is meant that the intervals start and end at the same times. The at least one capacitive component, mentioned previously, may comprise the one or more energy storage capacitors.

The first regulated power converter may be configured to, during the fourth interval, discharge the one or more energy storage capacitors through at least one inductor. The one or more energy storage capacitors may be discharged softly, optionally in a resonant manner.

Here, "soft" charge or discharge of a capacitor refers to a charge/discharge process performed via an inductor. The inductor in question may be the at least one magnetic component mentioned previously, or a parasitic component of that magnetic component. The parasitic component may represent leakage due to imperfect coupling, for example. "Soft" charging/discharge may be contrasted with "hard" charging/discharging. "Hard" charge/discharge refers to charging/-discharging the capacitor via a voltage source or short-circuit (e.g., with a switch), or by connecting it to other capacitors.

The one or more energy storage capacitors may form part of a resonant tank network together with one or more inductors.

In some examples, the one or more inductors of the resonant tank network may comprise the said listed magnetic energy storage component(s). In some examples, the one or more inductors of the resonant tank network may include a leakage inductor (for example, from the coupled inductors or the transformer (or autotransformer) with non-negligible energy storage used to store magnetic energy or another magnetic component). In some examples, the one or more inductors of the resonant tank network may be separate (physically and/or magnetically) from the magnetic energy storage inductor(s).

In some examples, the resonant tank network may be a series-resonant tank.

The power converter circuit may further comprise a further regulated power converter, having a third input and a third output, wherein the third input is configured to be coupled to the source and the third output is configured to be coupled to the load.

The first input, the second input, and the third input may be coupled in series, such that a third average current supplied from the source to the third input is equal to the first average current and the second average current.

The first output, the second output, and the third output may be coupled in parallel, such that a third voltage at the third output is equal to the first voltage and the second voltage.

The further regulated power converter may be a (second) regulated pulse width modulated (PWM) converter.

The controller may be configured to control the switching elements of the respective regulated power converters so that the first regulated power converter, the second regulated power converter, and the further regulated power converter operate in different phases.

The power converter circuit may further comprise a further regulated hybrid converter, having a fourth input and a fourth output, wherein the fourth input is configured to be coupled to the source and the fourth output is configured to be coupled to the load.

The first input, the second input, (the third input) and the fourth input may be coupled in series, such that a fourth average current supplied from the source to the fourth input is equal to the first average current and the second average current (and the third average current).

The first output, the second output, (the third output) and the fourth output may be coupled in parallel, such that a fourth voltage at the fourth output is equal to the first voltage and the second voltage (and the third voltage).

The further regulated hybrid converter may be a semi-resonant converter.

The controller may be configured to control the switching elements of the respective regulated power converters so that the first regulated power converter, the second regulated power converter, (the further regulated power converter) and the further regulated hybrid converter operate in different phases.

The further regulated hybrid converter may be configured to transfer energy from the fourth input to the fourth output by at least one magnetic component and at least one capacitive component.

In some examples, the power converter circuit may comprise a number (n) of semi-resonant hybrid converters and a number (m) of PWM converters connected in an ISOP configuration (giving a total of n+m converters connected in the ISOP configuration). Here, n and m are integers. The total number of converters is at least two. That is, $n+m \geq 2$. The number of semi-resonant hybrid converters is greater than or equal to one. That is, $n \geq 1$.

The first regulated power converter may comprise a semi-resonant hybrid converter.

The first regulated power converter may comprise a high-side switching element and a low-side switching element connected in series. The first regulated power converter may comprise a reservoir capacitor connected in series with the low-side switching element. The low-side switching element may be connected in series between the high-side switching element and the reservoir capacitor. The high-side switching element and the low-side switching element may be coupled together at a switch node. The first regulated power converter may further comprise a transformer (optionally an autotransformer).

In some examples, the transformer has a primary winding and a secondary winding. The primary winding is connected in series with the switch node through at least one inductive component and at least one capacitive component. The secondary winding is connected in series with the output and in series with a synchronous rectifier element (switch).

In some examples, the transformer is an autotransformer (equivalently, a tapped inductor). $N_1$ turns of the autotransformer / tapped inductor are connected in series with the switch node through at least one inductive component and at least one capacitive component. The $N_1$ turns are connected to ground through a synchronous rectifier element (switch). $N_2$ turns of the autotransformer / tapped inductor are connected in series with the output. The $N_2$ turns are also connected to ground through the synchronous rectifier element.

In the first interval, the at least one magnetic component may behave as an inductor (storing energy). In the fourth interval, the at least one magnetic component may behave as a transformer (transferring energy to the load). The first interval may correspond to the on-time of a first control switch. The first control switch may be connected in series between the first input and the at least one magnetic component and at least one capacitive component. The fourth interval may correspond to the on-time of a second control switch. The second control switch may be connected in series with the first input but in parallel with the at least one magnetic component and at least one capacitive component.

The second regulated power converter may comprise one of: (i) a buck converter and (ii) a regulated hybrid converter, optionally a semi-resonant hybrid converter. The semi-resonant converter may have a topology such as one those summarised above.

The power converter circuit may further comprise a reservoir capacitor ($C_c$), wherein the reservoir capacitor ($C_c$) is configured to receive energy from the first regulated power converter, and wherein the second regulated power converter is configured to receive energy from the reservoir capacitor ($C_c$) at the second input.

The power converter circuit may further comprise a second reservoir capacitor. The second reservoir capacitor may be configured to receive energy from the source. The first regulated power converter may be configured to receive energy from the second reservoir capacitor.

The second reservoir capacitor may be connected in parallel with the first input. The reservoir capacitor may be connected in parallel with the second input.

Each reservoir capacitor may be an input capacitor of the respective power converter. An average voltage across each reservoir capacitor (e.g., over a switching cycle) may determine the fraction of the input voltage received at the respective input. Also provided is a circuit comprising:

> a first power converter circuit according to any one of the preceding claims; and
> a second power converter circuit according to any one of the preceding claims,
> wherein an input of the first power converter circuit is coupled in parallel with an input of the second power converter circuit, and
> an output of the first power converter circuit is coupled in parallel with an output of the second power converter circuit.

This circuit may build an "input parallel, output parallel" (IPOP) topology from two (or more) ISOP circuits. In each ISOP circuit there may be two or more regulated power converters.

The circuit may further comprise a trans-inductor voltage regulator, hereinafter TLVR, connection between the first power converter circuit and the second power converter circuit.

The TLVR connection may be provided between the second regulated power converter (e.g., PWM converter) of the first power converter circuit and the second regulated power converter (e.g., PWM converter) of the second power converter circuit.

The TLVR connection may comprise a plurality of series-connected inductive elements, including at least two series-connected inductive elements, each magnetically coupled to an inductive component of the respective power converter circuit (in particular, to an inductive component of the respective second power converter circuits), thus realizing an indirect (electric) coupling among multiple converters.

When either of the power converter circuits comprises three or more (ISOP-connected) regulated power converters, the plurality of series-connected inductive elements may comprise additional inductive elements. Each inductive element may be magnetically coupled to an inductive component of a respective power converter circuits. In particular, when there are multiple ISOP-connected PWM converters, an inductive component of each PWM converter may be magnetically coupled to a respective inductive element in the plurality of series-connected inductive elements. That is, all of the PWM converters may be coupled together in a TLVR arrangement.

Each of the first power converter circuit and the second power converter circuit may comprise one or more switching elements operated in a switching cycle, and the circuit may further comprise a controller, wherein the controller is optionally configured to control the switching elements of the first power converter circuit and the second power converter circuit to operate in different phases.

In particular, the switching elements that are controlled to operate in different phases may be control switches.

In this way, a multiphase converter may be implemented. The phases may relate to partitions in time of an overall switching cycle of the circuit. The controller may generate control signals - for example, PWM control signals - for the switching elements (e.g. control switches) with a phase shift between the control signals for the first power converter circuit and the control signals for the second power converter circuit. The different phases may overlap. A phase-shift between successive phases (and PWM control signals) - and, similarly, an overlap between successive phases - may depend on the number of regulated power converters and/or number of power converter circuits working together to form the multiphase converter. The phases may be evenly spaced, to help reduce a current ripple at the output. By "evenly spaced", it is meant that there may be a uniform phase shift between all successive phases.

Each regulated converter of each power converter circuit may be controlled operate in a different phase. It should be understood that the circuit may comprise a plurality of regulated converters (some in the first power converter circuit, some in the second power converter circuit, and optionally others in one or more further power converter circuits). The outputs of the plurality of regulated converters are connected in parallel. In general, the different phases may be assigned to different regulated converters of the plurality in any desired way.

The controller may comprise a power sharing control loop configured to: obtain a first voltage set point, wherein the first voltage set point is based on a desired average of voltages at all first inputs of the respective power converter circuits; obtain a measured first voltage, wherein the measured first voltage is indicative of an average of the voltages at all said first inputs; and control the switching elements to reduce an error between the first voltage set point and the measured output voltage.

When there are exactly two (IPOP-connected) power converter circuits, the average is an average of the voltage at the first input of the first power converter circuit and the voltage at the first input of the second power converter circuit. If there are exactly three (IPOP-connected) power converter circuits, the average is an average of the respective three first inputs. It should be understood that the same pattern applies likewise to higher numbers of IPOP-connected converter circuits.

The controller may be configured to control the switching elements of the first regulated power converter of the first power converter circuit and the first regulated power converter of the second power converter circuit, based at least in part on a result of a comparison between the first voltage set point and the measured first voltage.

The comparison may comprise subtraction. The result of the comparison may comprise a difference between the first voltage set point and the measured first voltage.

In some examples, the controller may be configured to generate control signals for the switching elements with a switching frequency based at least in part on the result of the comparison. In some such examples, an off-time of the switching elements (in particular, the control switches) may be held constant or substantially constant over successive switching periods (in particular, despite variations in the switching frequency). The off-time may be constant or adaptive. In the case of adaptive off-time, the off-time may vary more slowly than the switching frequency.

In some examples, the controller may be configured to generate control signals for the switching elements with a constant switching frequency and a duty cycle based at least in part on the result of the comparison.

The controller may be configured to control the switching elements of the second regulated power converter of the first power converter circuit and the second regulated power converter of the second power converter circuit, based at least in part on a result of a comparison between the first voltage set point and the measured first voltage.

The comparison may comprise subtraction. The result of the comparison may comprise a difference between the first voltage set point and the measured first voltage.

In some examples, the controller may be configured to generate control signals for the switching elements with a switching frequency based at least in part on the result of the comparison. In some such examples, an on-time of the switching elements (in particular, the control switches) may be held constant (despite variations in the switching frequency)

In some examples, the controller may be configured to generate control signals for the switching elements with a constant switching frequency and a duty cycle based at least in part on the result of the comparison..

The controller optionally comprises a power sharing control loop configured to: obtain a second voltage set point, wherein the second voltage set point is based on a desired average of voltages at all second inputs of the respective power converter circuits; obtain a measured second voltage, wherein the measured second voltage is indicative of an average of the voltages at all said second inputs; and control the switching elements to reduce an error between the second voltage set point and the measured second voltage.

The controller may be configured to control the switching elements of the first regulated power converter of the first power converter circuit and the first regulated power converter of the second power converter circuit, based at least in part on a result of a comparison between the second voltage set point and the measured second voltage.

The controller may be configured to control the switching elements of the second regulated power converter of the first power converter circuit and the second regulated power converter of the second power converter circuit, based at least in part on a result of a comparison between the second voltage set point and the measured second voltage.

The comparison may comprise subtraction. The result of the comparison may comprise a difference between the second voltage set point and the measured second voltage.

In some examples, the controller may be configured to generate control signals for the switching elements with a switching frequency based at least in part on the result of the comparison. In some such examples, an off-time or an on-time of the switching elements may be held constant (despite variations in the switching frequency).

In some examples, the controller may be configured to generate control signals for the switching elements with a constant switching frequency and a duty cycle based at least in part on the result of the comparison.

The controller may comprise, for each of (i) the first power converter circuit and (ii) the second power converter circuit, a load current sharing control loop configured to minimise a difference between an output current of the second regulated power converter of that power converter circuit and an average output current of all second regulated power converters.

Each load current sharing control loop may be configured to adjust the control signals for the switching elements of the second regulated power converter (in the respective power converter circuit) so that the output current of that second regulated power converter approaches the average current of all the second regulated power converters (across the different phases / power converter circuits).

The controller may be configured to control the switching elements of each second regulated power converter based at least in part on a result of a comparison between the output current of that second regulated power converter and the average output current across all of the second regulated power converters. For example, when there are exactly two power converter circuits, the controller may be configured to control the switching elements of each second regulated power converter based at least in part on a result of a comparison between the output current of that second regulated power converter and the average output current across both the second regulated power converters.

The controller may comprise an output voltage control loop configured to: obtain an output voltage set point, being a desired output voltage of the circuit; obtain a measured output voltage of the circuit; and control the switching elements to reduce an error between the output voltage set point and the measured output voltage, wherein the controller is optionally configured to control the switching elements of the second regulated power converter of the first power converter circuit and the second regulated power converter of the second power converter circuit, based at least in part on a result of a comparison between the output voltage set point and the measured output voltage.

The comparison may comprise subtraction. The result of the comparison may comprise a difference between the output voltage set point and the measured output voltage.

The controller may be configured to generate a duty cycle value based on the result of the comparison, and to generate control signals for the switching elements based at least in part on the duty cycle value.

In some examples, the controller may be configured to generate control signals for the switching elements with a switching frequency based at least in part on the result of the comparison. In some such examples, an on-time of the switching elements (in particular, the control switches) may be held constant (despite variations in the switching frequency).

BRIEF DESCRIPTION OF THE DRAWINGS

The invention will now be described by way of example with reference to the accompanying drawings, in which:

Fig. 1 is a block diagram showing a power converter circuit according to a first example;
Fig. 2 shows an equivalent circuit for analysing the operation of the power converter circuit of Fig. 1;
Fig. 3 shows a nonlinear large-signal feedback model derived from the equivalent circuit of Fig. 2;
Fig. 4A is a block diagram showing a power converter circuit according to a second example;
Fig. 4B is a block diagram showing an alternative equivalent implementation of the power converter circuit of Fig. 4A;
Fig. 5 shows a circuit comprising N instances of the power converter circuit of Fig. 4A, arranged in an input-parallel, output-parallel configuration;
Fig. 6 shows an equivalent circuit for a simplified example based on Fig. 5, in which N=2;
Fig. 7 shows a nonlinear large-signal feedback model derived from the equivalent circuit of Fig. 6;
Fig. 8A is a circuit diagram of a hybrid converter incorporating an autotransformer and a series reservoir capacitor;
Fig. 8B is a circuit diagram of a variant of the hybrid converter of Fig. 8A with galvanic isolation between the input and output;
Fig. 9 is a circuit diagram showing an implementation of a power converter circuit according to the example of Fig. 4A;
Figs. 10A-13 illustrate the operation of the power converter circuit of Fig. 9 over various time intervals;
Fig. 14 shows a variant of the circuit of Fig. 5, implementing TLVR coupling between buck converters;
Fig. 15 illustrates how power is shared between the two regulated power converters in the power converter circuit of Fig. 4A;
Fig. 16 illustrates an example of a power-sharing control-loop suitable for the circuit of Fig. 5 or Fig. 14;
Fig. 17 illustrates an alternative example of a power-sharing control-loop;
Fig. 18 illustrates another alternative example of a power-sharing control-loop;
Fig. 19 illustrates a variant of the power-sharing control-loop of Fig. 18;
Fig. 20 illustrates an example of an output-voltage control-loop suitable for the circuit of Fig. 5 or Fig. 14;
Fig. 21 illustrates how the power converter circuit of Fig. 4B can enable a fast load transient response;
Fig. 22 illustrates an example of load-current sharing control-loop suitable for the circuit of Fig. 5 or Fig. 14;
Fig. 23 illustrates a combination of load-current sharing control and output voltage control according to an example; and
Fig. 24 is a block diagram illustrating an exemplary digital controller suitable for implementing control loops such as those in the examples of Figs. 16-20, 22, and 23.

It should be noted that these figures are diagrammatic and not drawn to scale. Relative dimensions and proportions of parts of these figures have been shown exaggerated or reduced in size, for the sake of clarity and convenience in the drawings.

DETAILED DESCRIPTION

With the rapid deployment of hyperscale and artificial intelligence datacenters, a surge in the installed power per rack has been recorded. This called for the shift from a 12 V DC to a 48 V DC bus voltage. While, on one hand, this reduced the distribution losses and the cost, on the other hand it created a new problem in powering digital integrated circuit (IC) loads from the 48 V supply. Historically, digital loads such as e.g., microprocessors were directly supplied from a 12 V bus - for example, by a multiphase, synchronous buck converter. The requirements in density, efficiency and dynamical performances were successfully met by such a system, which is also inherently scalable with the power with the deployment of a sufficient number of phases. However, established architectures fail to meet these requirements when the bus voltage increases to 48 V. Accordingly, new ways to supply the digital loads must be found.

Hybrid converters may be suitable for this task, thanks to their higher power density and efficiency. Hybrid converters rely on both inductive and capacitive energy transfer and can achieve high power density and efficiency in power conversion. They aim to merge the advantages of established converters which rely on magnetic energy storage (e.g., output voltage regulation), with the higher density typical of switched-capacitor converters.

Hybrid converters can utilize capacitors, transformers, and inductors to "hybridly" process power. Some hybrid converters can provide output voltage regulation. For example, output voltage regulation may be achieved by controlling the flux linkage of some suitable inductor(s). In some cases, the role played by the inductor(s) (in its/their simplest form, as well as in the form of a coupled inductors) may be twofold - providing both the capability of output voltage regulation and soft charging and/or discharging for the energy storage capacitor(s). In case a coupled inductor is employed, the turns ratio is an additional parameter that can be leveraged for the voltage conversion.

A particular sub-class of regulated hybrid converters (equivalently: hybrid regulated converters) is identified by those converters in which:

- The output voltage can be regulated against input source and output load variations, by controlling the duty ratio.
- During at least one interval of the switching cycle, energy is transferred from the input voltage source and stored in the form of magnetic energy across one or more inductors (optionally including magnetizing inductors of transformers or autotransformers) or coupled inductors, and this energy is released to the output during another interval of the switching cycle. This represents indirect magnetic energy processing.
- During at least one interval of the switching cycle, energy is transferred from the input voltage source to one or more energy storage capacitor(s), and during another interval of the switching cycle the energy is released to the output (with the capacitor(s) being softly discharged in a resonant manner). This may involve direct and/or indirect electric energy processing. The resonance may involve the energy storage capacitor(s) and one or more inductors implementing a resonant tank network (including, but not limited to, a series-resonant tank). The inductor of the resonant tank may be the same physical inductor or coupled inductor used for the magnetic energy storage, or a leakage inductor from the same or another magnetic lump, or some other inductor.

Regulated hybrid converters that adhere to these characteristics are also referred to herein as semi-resonant converters. They can exhibit the characteristics of pulse-width modulated converters over the entire switching period, while operating like resonant converters with sinusoidal-like waveforms only for a portion of the switching period. An example of a semi-resonant converter is described in more detail later below.

The current resonance established during the discharge of the energy transferring capacitor(s) can enable the circuit to avoid the charge-sharing losses otherwise occurring in a hard-discharge, and can enable soft-switching of the power semiconductors, thereby boosting the conversion efficiency. However, the resonant frequency depends on the tolerances of the passive components of the resonant tank. Consequently, when such a semi-resonant converter is used in a parallel, multiphase architecture, the phases are exposed to output current imbalances. The problem is of particular importance because it may be desirable to design the hybrid converter to deliver most of the power to the output during the portion of the switching cycle which corresponds to the resonant mode of operation. Such a design may to help to optimize the converter for power density. Due to most of the current being supplied to the load during the resonant discharge of the energy storage capacitor, the multiphase parallel operation of the converter can be significantly impeded. This is compounded by the high sensitivity of the resonant currents to component tolerances in the resonant tanks.

As the resonant converter voltage gain $M = V_{out}/V_{in}$ is proportional to the resonant network voltage gain, which in turns is dependent on the value of the respective reactive elements, any variations in the reactive components values directly affect the conversion gains.

The output impedance of each of the parallel converters in the multi-phase arrangement is generally a low number (in the order of hundreds of microohms to tens of milliohms). Furthermore, since each converter operated at or close to its resonance frequency, the output impedance is mostly real (resistive) in nature. This can have the result that even a small deviation in the converter's voltage gain can result in large current imbalances, as each converter sees the same input voltage. The voltage gains of the converters could, in principle, be equalized by adjusting the respective switching frequency, but this practice is generally avoided in the multiphase parallel operation of (semi-)resonant converters, as shifts in the switching frequencies may result in imperfect current ripple cancellation and/or unwanted low-frequency beat effects.

Depending on the characteristic impedance and the quality (Q) factor of the resonant tank (which may be load dependent), even a small component value mismatch (for example, of the order of $\pm 5\%$) in the resonant tanks of different converters arranged in parallel can result in significant current imbalances.

One type of parallel arrangement of converters may involve a configuration in which all the input ports of the converters are connected in parallel to the same power source. (That is, they all share the same input voltage.) Likewise, all the output ports of the converters are connected in parallel to the same output load (such that they all share the same output voltage). This configuration is called input-parallel output-parallel (IPOP). The IPOP connection of converters can address the need for modularity and scalability - for example, to expand the power rating of a conversion system by exploiting multiphase operation.

Another alternative type of arrangement is "input-series, output-parallel" (ISOP). In an ISOP configuration, all the input ports of the converters are serially connected. Thus, they all share the same input current (on average, over the switching cycle). All the output ports of the converters are connected in parallel to the same output load (such that they all share the same output voltage).

Examples according to the present disclosure can facilitate automatically sharing a load current among parallel, regulated converters, including one or more semi-resonant hybrid converters.

Examples can provide at least two ways to share the load among parallel, regulated converters.

The first approach involves the deployment of two or more phases of regulated converters (including at least one semi-resonant hybrid converter), configured in an ISOP architecture. When the converters are configured in an ISOP architecture, their input/reservoir capacitors can provide a way to realize a negative feedback loop which counteracts any phase current imbalances. Power sharing across the converters, which is proportional to the respective input voltages, can be controlled by means of passive or active balancing of the voltage across the input capacitors.

The second approach involves IPOP connection of two or more phases of ISOP converters. Each ISOP converter is realized as the ISOP connection of a regulated hybrid converter and another regulated converter - for example, a pulse width modulated (PWM) inductor-based topology. By controlling load current sharing between the regulated PWM converters (for example, by means of a passive droop and/or an active current sharing controller) the output currents of the regulated semi-resonant hybrid converters may be equalized. Optionally, a power sharing controller regulates the average input capacitor voltages (over the N phases) to follow the same reference/setpoint. The input/reservoir capacitors can provide a way to implement a negative feedback loop which counteracts the phase current imbalances, compensating for the tolerance in the gain of the hybrid converters by adjusting their individual voltages around the average setpoint. The natural feedback provided by the input/reservoir capacitor enables load current sharing also in response to fast dynamic load changes.

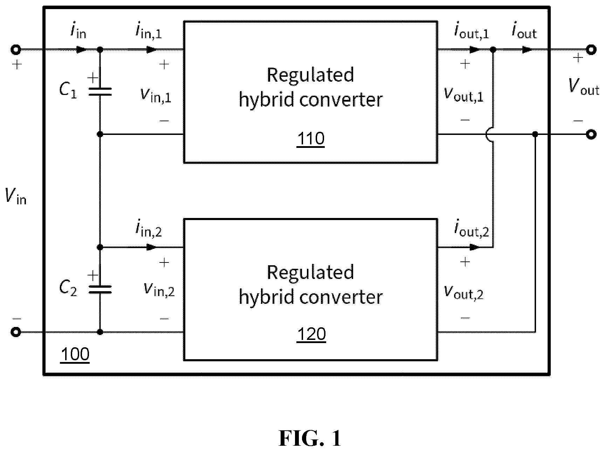

Fig. 1 shows a first example of a power converter circuit 100 according to the present disclosure. The power converter circuit 100 comprises a first regulated hybrid converter 110 and a second regulated hybrid converter 120. The inputs of the two regulated hybrid converters 110, 120 are connected in series. Their outputs are connected in parallel. Therefore, the two converters 110, 120 are connected in an ISOP configuration. A first capacitor C, is connected in parallel with the input of the first regulated hybrid converter 110; a second capacitor $C_2$ is connected in parallel with the input of the second regulated hybrid converter 120. Note that, although they are shown as external components in Fig. 1, these capacitors may be provided by internal capacitors of the respective converters (i.e., they represent integral parts of the respective topologies), in some examples (and in some drawings herein). Although the example of Fig. 1 includes exactly two regulated converters (in particular, two regulated hybrid converters), it should be understood that this is not limiting. Variants of this example could comprise three or more regulated hybrid converters, connected in an ISOP configuration. Each of the constituent converters is controlled to operate in a different phase.

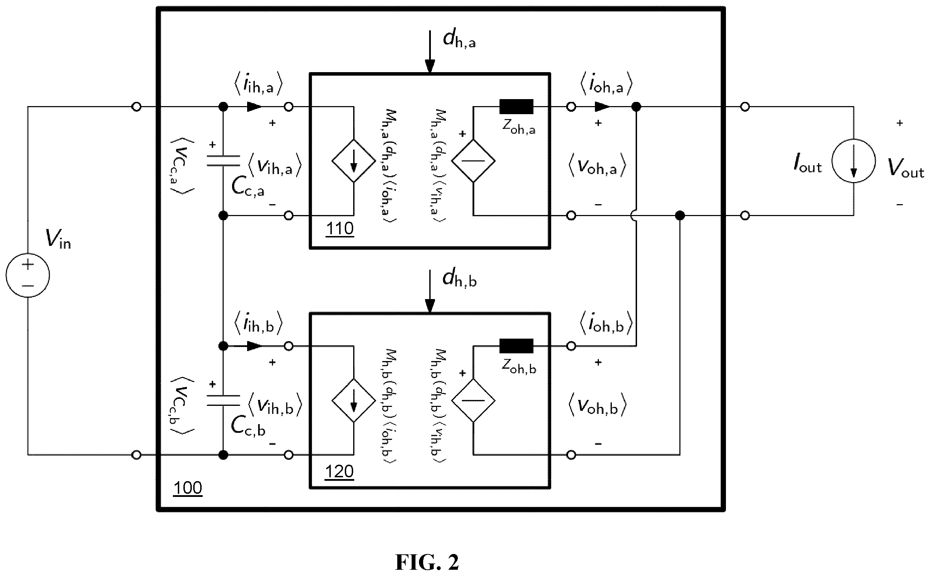

Each regulated hybrid converter in the ISOP arrangement can be modeled as a generic controlled DC transformer plus a generic output impedance. In this way, the example of Fig. 1 can be equivalently represented as shown in Fig. 2. This representation is helpful to derive a simple switching-cycle averaged large-signal model that highlights the negative feedback realized by the reservoir capacitors and which naturally balances the load sharing.

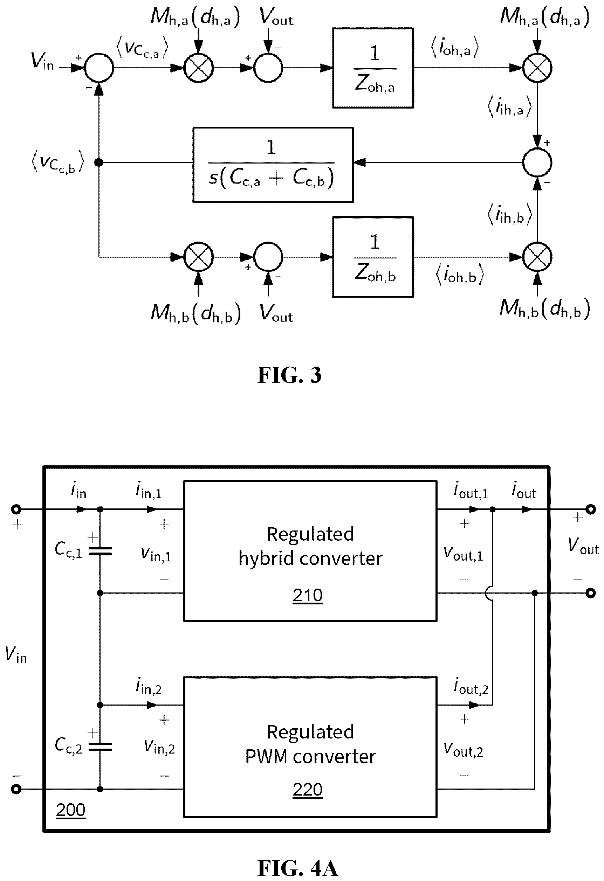

Table 1 below summarises the notation used in Fig. 2 and Fig. 3. To simplify the mathematical analysis, we have considered an ideal voltage source at the input and a constant current load at the output of the ISOP converter. However, this is not essential, nor is it restrictive of the scope of the present disclosure.

**Table 1: Notation adopted in Figs. 2 and 3**

| Symbol | Description |
|---|---|
| $a, b, ...$ | Subscripts used to define an ordered list of phases |
| $V, I$ | Constant voltage, constant current |
| $v, i$ | Time-varying voltage v(t), Time-varying current $i(t)$ |
| $T_s$ | Switching period |
| $(x)$ | Condensed notation for $\langle x \rangle_{T_s}(t)$ i.e., the average of the generic time-varying quantity x over the switching period $T_s$, being itself another time-varying quantity |
| $C_c$ | Input capacitors of the hybrid converters/reservoir capacitor in the context of a sigma connection |
| $d_h$ | Time-varying duty-cycle for the hybrid converters |
| $M_h$ | $$M_h = \frac{\langle v_{oh} \rangle}{\langle v_{ih} \rangle}$$ Time-varying gain for the hybrid converters |
| $Z_{oh}$ | Output impedance for the hybrid converters |
| $\dfrac{1}{s}$ | Denotes an operation of integration over time (with abuse of notation) |

From analysis of the circuit in Fig. 2, it is possible identify a nonlinear, large-signal averaged equivalent block scheme, as shown in Fig. 3. For simplicity, this scheme neglects the dynamic over the output filtering capacitor and assumes a perfectly regulated output voltage $V_{out}$. From this model, it is evident how the input capacitors/reservoir capacitors $C_c$ can provide a negative feedback loop which counteracts an imbalance in the phase currents. The imbalance may be the result of a disturbance in the balanced operating conditions and/or any mismatch between the two phases (gain, output impedance, etc.). For balanced operation with matched components, the average voltage across each input/reservoir capacitor will be half of the input voltage from the source. That is: $\langle v_{Cc,a} \rangle = \langle v_{Cc,b} \rangle = V_{in}/2$.

Let us assume that, because of component tolerances, the resonant tanks of the two phases (that is, the two converters 110, 120) are not perfectly matched. Let us assume that this mismatch causes the gain $M_{h,a}$ of the phase "a" converter 110 to be slightly larger than the gain $M_{h,b}$ of the phase "b" converter 120. Let us also assume, for simplicity (but without loss of generality), that the respective output impedances are not affected by the mismatch, and are equal $Z_{oh,a} = Z_{oh,b} = Z_{oh}$. The mismatch in the phase "a" converter gain will cause the average phase "a" output current $\langle i_{oh,a} \rangle$ to increase with respect to $\langle i_{oh,b} \rangle$. The imbalance is reflected in the average input currents of the converters, depending on the respective gains. The positive error average input current $\langle i_{ih,a} - i_{ih,b} \rangle$ will cause the voltage across the phase "b" reservoir capacitor $\langle v_{Cc,b} \rangle$ to increase. This in turn will reduce the input voltage available for the phase "a" converter, which will result in a reduction in the average output current $\langle i_{oh,a} \rangle$, resulting in the desired negative-feedback action. The same principles can be applied to all a mismatch caused by unmatched output impedances and in the combined case of unmatched gains and output impedances. The same principle explained for the simple case of two phases can be extended to any number of phases $N \geq 2$.

The nature of the time-averaged scheme in Fig. 3 suggests that the latency of the feedback loop so created is in the order of the switching period $T_s$, enabling a fast reaction to any perturbances - for example, fast output load transients. The actual bandwidth of the loop is a function of the reservoir capacitance and other parameters of the converters. It is also affected by the number of phases $N$ involved, as well as by the interleaving angle adopted among the different phases.

During steady-state operation, the ISOP connection enforces the average input currents of the converter-phases to be the same $\langle i_{ih,a} \rangle = \langle i_{ih,b} \rangle = \langle i_{in} \rangle$. Then, the power sharing across the converters is proportional to the respective input voltages: $\langle p_{in,a} \rangle / \langle p_{in,b} \rangle = \langle v_{Cc,a} \rangle / \langle v_{Cc,b} \rangle$. The average power sharing across multiple phases within the ISOP connection can be enforced by means of passive or active balancing of the voltage across the input capacitors. This additional control can ensure that all the phases process, on average, the same power $P_{in}/N = V_{in}\langle i_{in} \rangle/N$. Equivalently it can ensure that the average input voltages of the $N$ phases in the ISOP configuration are equal to 1/$N$ times the input voltage: $\langle v_{Cc} \rangle = (\langle v_{Cc,a} \rangle + \langle v_{Cc,b} \rangle + ...)/N = V_{in}/N$.

Fig. 4A shows a second example of a power converter circuit 200 according to the present disclosure. The power converter circuit 200 comprises a regulated hybrid converter 210 and a regulated PWM converter 220. The inputs of the two converters 210, 220 are connected in series. Their outputs are connected in parallel. Therefore, the two converters 110, 120 are connected in an ISOP configuration. An input capacitor $C_{c,1}$ is connected in parallel with the input of the regulated hybrid converter 210. A reservoir capacitor $C_{c,2}$ is connected in parallel with the input of the regulated PWM converter 220. Although illustrated in Fig. 4A as being external to the respective converters, each input/reservoir capacitor may be provided as an internal capacitor (i.e., a capacitor which is integral part of the topology, for example, a reservoir capacitor) of the respective converter. Once again, although the example of Fig. 4A includes exactly two regulated converters, it should be understood that this is not limiting. Variants of this example could comprise three or more regulated converters, connected in an ISOP configuration. Each additional converter may be a regulated hybrid converter or a regulated PWM converter. Each of the constituent converters is controlled to operate in a different phase.

In the example of Fig. 4A, the regulated PWM converter 220 is able to regulate its output voltage by modulating the flux linkage over one or more inductors. The input voltage $V_{in}$ is applied to the series connection of converters. The regulated hybrid converter processes part of this voltage, since its input port is connected to the reference potential ("-") through the reservoir capacitor $C_{c,2}$. The reservoir capacitor $C_{c,2}$ also plays the role of input capacitor for the regulated PWM converter. In this sense, the reservoir capacitor $C_{c,2}$ is used as the energy source for the PWM regulated stage. The reservoir capacitor $C_{c,2}$ is being charged by the regulated hybrid converter and discharged by the regulated PWM converter.

As the regulated semi-resonant hybrid converter 210 is capable of providing output voltage regulation, the introduction of the regulated PWM converter 220 is not primarily meant to provide output voltage regulation capabilities for the ISOP configuration. Instead, the regulated PWM converter 220 can offer a way to realize current sharing, when multiple phases based on this ISOP configuration are arranged together in an IPOP configuration. In this way, the ISOP configuration illustrated in Fig. 4A can provide an advantageous modular block for building more complex power converter circuits, as the design is scaled up to satisfy greater power requirements.

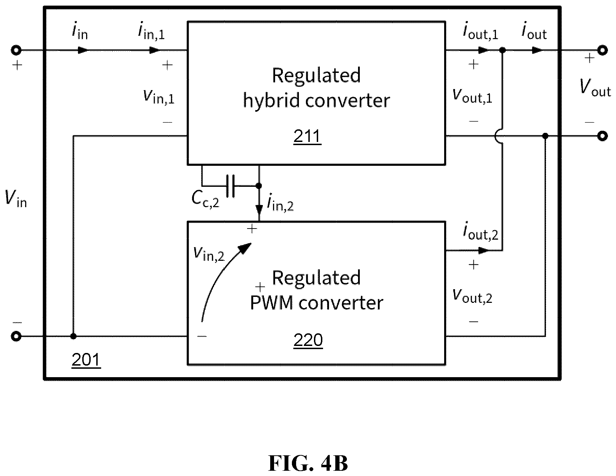

Fig. 4B shows an alternative, equivalent implementation of the power converter circuit of Fig. 4A. The power converter circuit 201 includes the same regulated PWM converter 220. However, in this example, the regulated hybrid converter 210 of Fig. 4A is replaced with a regulated hybrid converter 211, which is shown as having three ports. Its input is connected to the voltage source ($V_{in}$). A first output is configured to be connected to the load ($V_{out}$). A second output is connected to the input of the regulated PWM converter 220. This block diagram emphasizes that the regulated PWM converter 220 is powered by the reservoir capacitor $C_{c,2}$. The capacitor $C_{c,2}$ functions as a reservoir capacitor for the regulated hybrid converter 211 and as an input capacitor for the regulated PWM converter 220. The example of Fig. 4A can be compared to a "sigma" connection of two converters, while the example of Fig. 4B can be compared to a "hybrid sigma" connection.

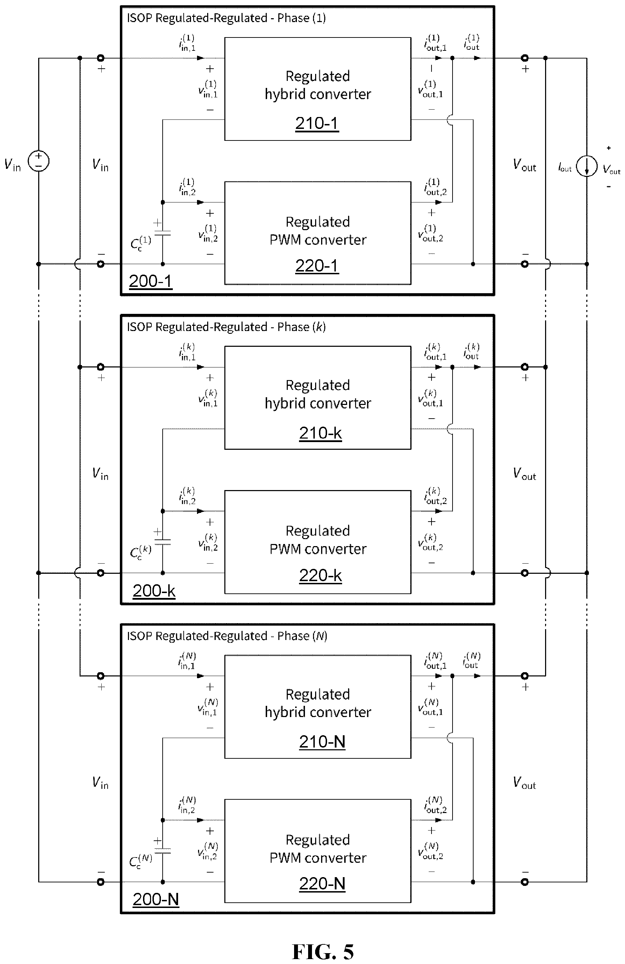

Fig. 5 illustrates such a scaled-up circuit, including N instances (phases) of the modular ISOP building block of Fig. 4A. Three phases are shown explicitly - a 1st, a kth and an Nth. The ISOP blocks are denoted 200-1, 200-k, and 200-N, respectively. The first power converter circuit 200-1 comprises a first regulated hybrid converter 210-1 and a first regulated PWM converter 220-1. The second power converter circuit 200-k comprises a second regulated hybrid converter 210-k and a second regulated PWM converter 220-k. The third power converter circuit 200-N comprises a third regulated hybrid converter 210-N and a third regulated PWM converter 220-N.

The example of Fig. 5 seeks to enable load current sharing among N phases of semi-resonant regulated hybrid converters. The circuit of Fig. 5 achieves this by using the PWM converters to assist in the load current sharing. The ISOP connection of a semi-resonant regulated hybrid converter and a PWM converter- explained above with reference to Fig. 4A - provides a building block for the multiphase system. The ISOP connection can enforce proportionality constraints between the quantities (average voltages and currents) at the ports of the hybrid and PWM converters. Such constraints can be exploited in the present example to indirectly achieve load current sharing among N phases of semi-resonant regulated hybrid converters, by directly controlling the load sharing across the N phases of regulated PWM converters. This may be done using a variety of control methods and architectures. For example, one of the control methods described in Luo et al. (S. Luo, Z. Ye, R.-L. Lin and F. Lee, "A classification and evaluation of paralleling methods for power supply modules," in 30th Annual IEEE Power Electronics Specialists Conference, Charleston, SC, USA, 1999) can be adapted to control the regulated PWM converters of the present example.

During steady-state operation, the ISOP architecture (see Fig. 4A / 4B) of each phase/building block forces the average input currents of the converters (within the ISOP building block) to be the same $\langle i_{in,1} \rangle = \langle i_{in,2} \rangle = \langle i_{in} \rangle$. Then, the power sharing across the converters is proportional to the respective input voltages: $\langle p_{in,1} \rangle / \langle p_{in,2} \rangle = \langle v_{in,1} \rangle / \langle v_{in,2} \rangle$. This means that neither the hybrid converter nor the regulated PWM converter processes the entire input power $\langle p_{in} \rangle = V_{in} \langle i_{in} \rangle$, but rather a controllable/adjustable fraction of it. This may be advantageous because, in order to enhance efficiency and/or power density, it may be beneficial to operate the ISOP building block such that the regulated PWM converter processes only a small fraction of the total input power.

The ISOP architecture of Fig. 4A / 4B enforces the relationships/constraints shown in the Table below at the ports of the converters realizing the input-series output-parallel connection. As the connection involves two switching-mode DC-DC converters, the relationships are presented in their broader sense (valid on average over a switching period).

**Table 2: Constraints enforced by the ISOP connection in Fig. 4A 148 at steady-state**

| Input ports | Output ports |
|---|---|
| $V_{\text{in}} = \langle v_{\text{in},1} \rangle + \langle v_{\text{in},2} \rangle$ | $V_{\text{out}} = \langle v_{\text{out},1} \rangle = \langle v_{\text{out},2} \rangle$ |
| $\langle i_{\text{in}} \rangle = \langle i_{\text{in},1} \rangle = \langle i_{\text{in},2} \rangle$ | $I_{\text{out}} = \langle i_{\text{out},1} \rangle + \langle i_{\text{out},2} \rangle$ |
| $\langle p_{\text{in},1} \rangle = \langle v_{\text{in},1} i_{\text{in},1} \rangle = V_{\text{in},1} \langle i_{\text{in}} \rangle$ | $\langle p_{\text{out},1} \rangle = \langle v_{\text{out},1} i_{\text{out},1} \rangle = V_{\text{out}} \langle i_{\text{out},1} \rangle$ |
| $\langle p_{\text{in},2} \rangle = \langle v_{\text{in},2} i_{\text{in},2} \rangle = V_{\text{in},2} \langle i_{\text{in}} \rangle$ | $\langle p_{\text{out},2} \rangle = \langle v_{\text{out},2} i_{\text{out},2} \rangle = V_{\text{out}} \langle i_{\text{out},2} \rangle$ |
| $\dfrac{\langle p_{\text{in},1} \rangle}{\langle p_{\text{in},2} \rangle} = \dfrac{V_{\text{in},1}}{V_{\text{in},2}}$ | $\dfrac{\langle p_{\text{out},1} \rangle}{\langle p_{\text{out},2} \rangle} = \dfrac{\langle i_{\text{out},1} \rangle}{\langle i_{\text{out},2} \rangle}$ |

$$\frac{V_{\text{in},1}}{V_{\text{in},2}} = \frac{\langle p_1 \rangle}{\langle p_2 \rangle} = \frac{\langle i_{\text{out},1} \rangle}{\langle i_{\text{out},2} \rangle} \quad \Rightarrow \quad \langle i_{\text{out},2} \rangle = \rho \langle i_{\text{out},1} \rangle \quad \text{where } \rho \triangleq \frac{V_{\text{in},2}}{V_{\text{in},1}}$$

From Table 2, it is evident that the ISOP connection can enforce a relationship of proportionality among the average output currents of the two converters. The coefficient of proportionality $\rho$ defines the power sharing ratio between the two converters, which is also equal to the ratio of their input voltages (since their average input currents are the same).

The circuit of Fig. 5 seeks to exploit this proportionality between the output currents to indirectly achieve load current sharing among N phases of semi-resonant regulated hybrid converters. In Fig. 5, as discussed already above, an example comprising $N$ ISOP Regulated-Regulated converters arranged in parallel (IPOP) is shown. By controlling the $N$ average output currents of the regulated PWM converters $\langle i^{(k)}_{\text{out},2} \rangle$ to be equal (for example, using any active or passive load current sharing method), then it can also be verified that the average output currents for the semi-resonant regulated hybrid converters $\langle i^{(k)}_{\text{out},1} \rangle$ are equalized over the $N$ phases. As the average is carried out over at least one entire switching period, the equalization is also effective for balancing the output currents of the semi-resonant hybrid converters during their resonant mode of operation, where the tolerances in the resonant tanks mostly affect the current sharing.

It is worth noting that, although the averaging operators are applied over the duration of at least an entire switching period, there is no restriction in this regard. It is also possible to choose two different switching periods/frequencies for the two converters in each ISOP building block. In such cases, the average operations for the different quantities in the two converters must be carried out consistently with their respective switching period/frequency. All the results derived above will then remain valid.

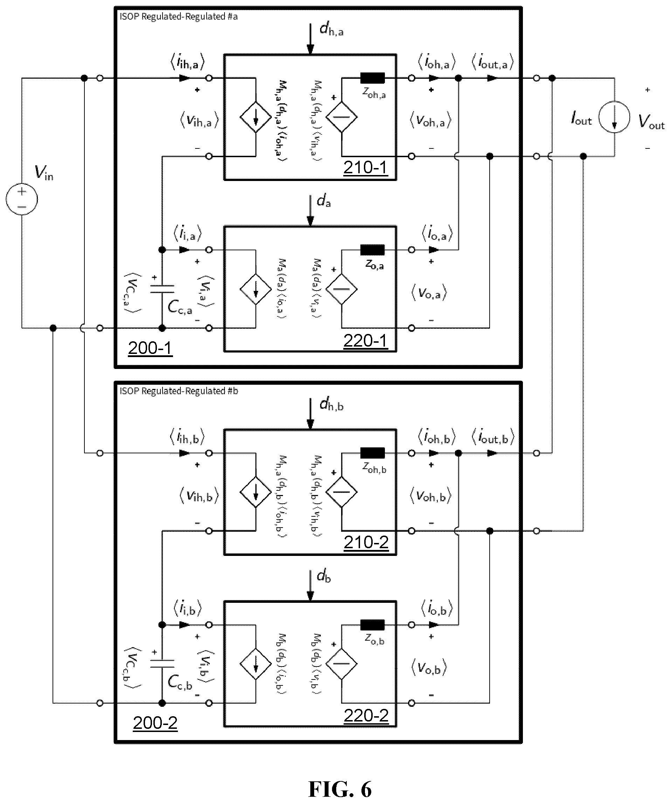

The relationships found above in Table 2 are valid for steady-state conditions. In order to understand how the power converters respond during transient events, consider an equivalent circuit for a simplified case having $N = 2$ phases of ISOP building blocks. This is illustrated in Fig. 6. Each converter 210-1, 220-1, 210-2, 220-2 of each ISOP building block 200-1, 200-2 can be modeled as a generic controlled DC transformer plus a generic output impedance. The symbol "h" is appended to various quantities in the model to distinguish the hybrid converters 210-1, 210-2 from the PWM converters 220-1, 220-2. This representation is helpful to derive a simple switching-cycle averaged large-signal model that highlights the negative feedback realized by the reservoir capacitors $C_{\text{c}}$ and which naturally balances out the load sharing.

To simplify the analysis, we consider an ideal voltage source at the input and a constant current load at the ports of the multiphase converter. However, it should be understood that there is no restriction that prevents removing such idealities (for example, by introducing a more general Thévenin/Norton description for source and load).

The table below explains the notation used in Fig. 6

**Table 3: Notation adopted in Fig. 6**

| Symbol | Description |
|---|---|
| *a, b, ...* | Subscripts used to define an ordered list of phases |
| *V, I* | Constant voltage, constant current |
| *v, i* | Time-varying voltage v(t), Time-varying current $i(t)$ |
| $T_s$ | Switching period |

(continued)

| Symbol | Description |
|---|---|
| (x) | Condensed notation for $\langle x \rangle_{T_s}(t)$ i.e., the average of the generic time-varying quantity $x$ over the switching period $T_s$, being itself another time-varying quantity |
| $C_c$ | Input capacitor / reservoir capacitor |
| $d$ | Time-varying duty-cycle for the converters |
| $M$ | Time-varying gain for the converters $\qquad M = \dfrac{\langle v_o \rangle}{\langle v_i \rangle}$ (vi) |
| $Z_o$ | Output impedance for the converters |
| $\dfrac{1}{s}$ | Denotes an operation of integration over time (with abuse of notation) |

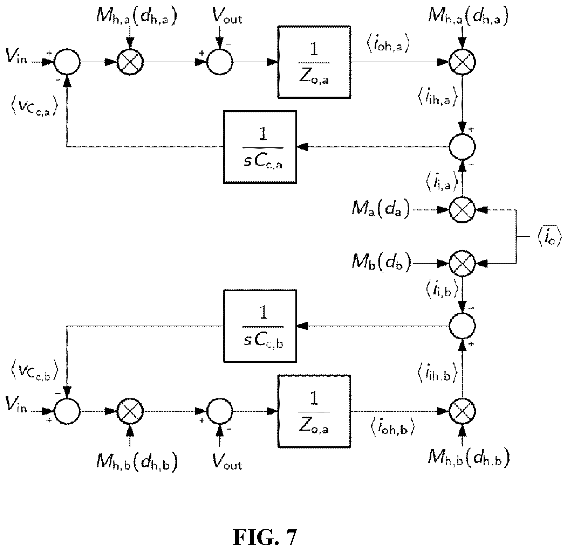

From analysis of the circuit in Fig. 6, it is possible identify a nonlinear, large-signal averaged equivalent block scheme, as illustrated in Fig. 7. For simplicity, this scheme neglects the dynamic over the output filtering capacitor and assumes a perfectly regulated output voltage $V_{out}$. The output voltage regulation can be performed either by the hybrid converters or the PWM converters.

From the equivalent circuit of Fig. 7, it is evident how the input capacitors/reservoir capacitors $C_c$ provide a means for realizing a negative feedback loop which counteracts an imbalance in the phase currents. The imbalance may be the results of a disturbance in the balanced operating conditions and/or a result of any mismatch among the two phases (gain, output impedance, etc... ).

Let us assume that the average output currents in the regulated PWM converters in the two phases are equalized by means of an ideal load current sharing controller, with infinite loop gain from $\omega = 0$ to $\omega = \infty$. For instance, let us assume

$$\forall t, \langle i_{o,a} \rangle = \langle i_{o,b} \rangle = \langle \overline{i_o} \rangle \triangleq \frac{\langle i_{o,a} \rangle + \langle i_{o,b} \rangle}{2}$$

an ideal averaging controller such that $\qquad$ . The control action exploits the duty modulation ($d_a$, $d_b$) of the regulated PWM converters.

Let us also assume that a power sharing control loop ensures that, on average over the two phases, $\langle v_{i,x} \rangle = \rho \langle v_{ih,x} \rangle$ for each phase x = a, b. Since $V_{in}$ is an ideal voltage source, this is the same as assuming that the $\langle v_{i,x} \rangle$ are, on average,

equal to a certain setpoint $V_i^*$. In other words, the objective of this loop is to ensure that $\langle \overline{v}_i \rangle \triangleq \frac{\langle v_{i,a} \rangle + \langle v_{i,b} \rangle}{2} = V_i^* = V_i^*$. It is desirable that the controller fixes the power sharing at the setpoint only by average, and not strictly on a phase-by-phase basis. This means that each phase can have a different power sharing split between the hybrid converter 210 and the PWM converter 220. The goal is to allow each phase to slightly adjust the voltage on the respective reservoir capacitor $\langle v_{Cc,x} \rangle = \langle v_{i,x} \rangle$ around the average setpoint $V_i^*$, as this can facilitate automatic current sharing in case of parameter-mismatch. (This will be discussed further below.) This also means that the power sharing achieved between hybrid and PWM converters in each phase will be slightly different in the event of parameter mismatch. The balanced operation with matched components will see $\langle i_{out,a} \rangle = \langle i_{out,b} \rangle$, $\langle i_{o,x} \rangle = \rho \langle i_{oh,x} \rangle$ and $\langle v_{i,x} \rangle = \rho \langle v_{ih,x} \rangle$ for each phase x = a, b.

Let us assume that, because of component tolerances, the resonant tanks of the hybrid converters 210-1, 210-2 in the two phases are not perfectly matched. Let us assume that this mismatch causes the gain of the phase "a" hybrid converter $M_{h,a}$ to be slightly larger than the gain of the phase "b" hybrid converter $M_{h,b}$. Let us also assume for simplicity (but without loss of generality) that the respective output impedances are not affected by the mismatch, and are equal $Z_{oh,a} = Z_{oh,b} = Z_{oh}$. The mismatch in the phase "a" hybrid converter gain will cause the average phase "a" output current $\langle i_{oh,a} \rangle$ to increase with respect to $\langle i_{oh,b} \rangle$. Since the total output current $I_{out}$ is assumed to be constant, an increase in average phase "a" output current $\langle i_{oh,a} \rangle \rightarrow \langle i_{oh,a} \rangle + \Delta i$ will result in an approximately corresponding decrease in average phase "b" output current $\langle i_{oh,b} \rangle \rightarrow \langle i_{oh,b} \rangle - \Delta i$, as the output currents of the PWM converters 220-1. 220-2 tend to stay constant, due to the action of the load sharing controller.

$$I_{out} = \langle i_{out,a} \rangle + \langle i_{out,b} \rangle = \langle i_{oh,a} \rangle + \langle i_{oh,b} \rangle + 2\langle \overline{i_o} \rangle \approx \left( \langle i_{oh,a} \rangle + \Delta i \right) + \left( \langle i_{oh,b} \rangle - \Delta i \right) + 2\langle \overline{i_o} \rangle$$

The imbalance is reflected in the average input currents of the hybrid converters 210-1, 210-2, depending on the respective gains. Let us assume that, since the average output currents of the regulated PWM converters 220-1, 220-2 are equalized, also their input currents are almost equal. (In other words, the load sharing controller introduces only small duty cycle deviations). The result is that the phase "a" experiences a positive average input current error deviation $\Delta\langle i_{\text{ih,a}} - i_{\text{i,a}}\rangle \simeq M_{\text{h,a}}(d_{\text{h,a}})\Delta i$ with respect to nominal conditions. This perturbation will cause the voltage across the phase "a" reservoir capacitor $\langle v_{\text{Cc,a}}\rangle$ to increase. This in turn will reduce the input voltage available for the phase "a" hybrid converter, which will result in a reduction in the average output current $\langle i_{\text{oh,a}}\rangle$. At the same time, phase "b" experiences a positive average input current error deviation $\Delta\langle i_{\text{ih,b}} - i_{\text{i,b}}\rangle \simeq M_{\text{h,b}}(d_{\text{h,b}})\Delta i$ with respect to nominal conditions. This perturbation will cause the voltage across the phase "b" reservoir capacitor $\langle v_{\text{Cc,b}}\rangle$ to decrease. This in turn will increase the input voltage available for the phase "b" hybrid converter, which will result in an increase in the average output current $\langle i_{\text{oh,b}}\rangle$. These two actions, together, result in the desired negative-feedback action.

The same principles can be applied for a mismatch caused by unmatched output impedances and in the combined case of unmatched gains and output impedances. The same principle explained for the simple case of two phases, can be naturally extended to any number of phases $N \geq 2$.

The ability of each phase to adjust the respective reservoir capacitor voltage around the average setpoint is therefore demonstrated to be the key mechanism allowing automatic current sharing in case of parameters mismatch in the power stages and/or controllers. This mechanism is automatically accomplished by the nature of the ISOP architecture and can therefore help to compensate for deviations occurring during transient events, in addition to compensating for steady-state mismatches.

The nature of the time-averaged scheme in Fig. 7 / Table 3 suggests that the latency of the feedback loop is in the order of the switching period $T_{\text{s}}$, enabling a fast reaction to any perturbances e.g. fast output load transients. The actual bandwidth of the loop is a function of the reservoir capacitance and other parameters of the converters, and is also affected by the number of phases $N$ involved, as well as by the interleaving angle adopted among the different phases.

Possible converter topologies for use in exemplary power converter circuits according to the present disclosure will now be discussed. In particular, a possible implementation will be described for the semi-resonant regulated hybrid converter and the regulated PWM converter part of each ISOP building-block (Fig. 4A / 4B). It should be understood that there is no restriction on choosing galvanically isolated topologies rather than non-isolated topologies. However, if non-isolated topologies are selected, some care must be taken, as the reference potentials are shifted because of the input-series connection.

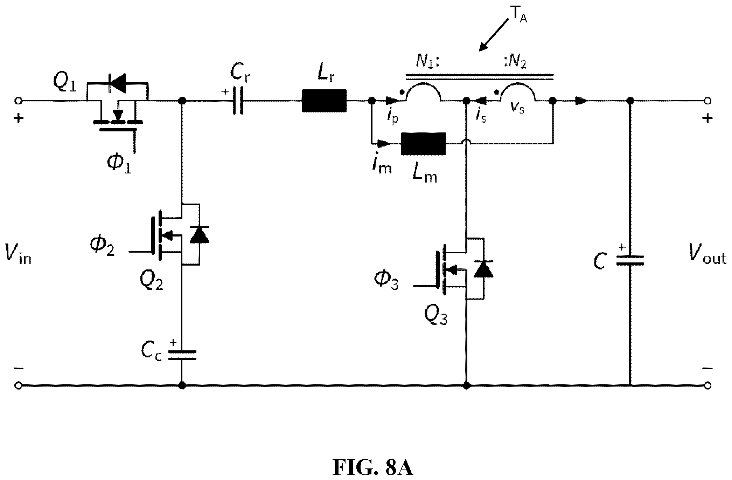

Fig. 8A shows an exemplary implementation for the semi-resonant hybrid converter 210 of the ISOP building block of Fig. 4A / 4B. This topology comprises a half-bridge driving a series resonant tank coupled in series with a transformer (in this case, an autotransformer) with non-negligible energy storage. The series resonant tank is realized by the series connection of a capacitor C, with an inductor $L_r$. The converter comprises three switching elements $Q_1$, $Q_2$, $Q_3$ (each provided by a MOSFET, in this example). The first two, $Q_1$ and $Q_2$, are control switches. The third, $Q_3$, acts as a synchronous rectifier element. Each switching element is controlled by a respective PWM control signal $\Phi$ (applied to the gate of the MOSFET).

The first and second switching elements $Q_1$, $Q_2$ are connected in series. The first switching element $Q_1$ acts as a high side switch; the second switching element $Q_2$ acts as low side switch. A capacitor $C_r$, an inductor $L_r$ and an autotransformer $T_A$ (whose magnetizing inductance is denoted $L_m$) are arranged in series with the first switching element $Q_1$. The autotransformer $T_A$ is also referred to herein as a "tapped inductor". One end of the windings of the tapped inductor provides the output node of the converter. The centre tap of the tapped inductor is connected in series with the third switching element. The capacitor $C_r$, inductor $L_r$, $N_1$ turns of the tapped inductor, and third switching element $Q_3$ are arranged in parallel with the second switching element $Q_2$. Note that, in some examples, the inductor $L_r$ may be provided (wholly or partly) by a leakage inductance associated with the tapped inductor. An output capacitor C is provided, connected to the output end of the tapped inductor and the source terminal of the third switching element $Q_3$.

The reservoir capacitor $C_c$ goes in series with the source-terminal of the low-side switch $Q_2$ towards the reference "-" potential. Provided that the capacitor $C_c$ is large compared to $C_r$, the current resonance is not perturbed, and the general operation of the underlying hybrid converter is preserved. If a stable steady-state voltage is allowed to build up across the reservoir capacitor $C_c$, the conversion gain of the converter will become a function of this voltage. This topology is non-isolated as input and output ports share the same reference potential.

The autotransformer $T_A$ can be considered equivalent to a transformer with $N_1+N_2$ turns in its primary winding and $N_2$ turns in its secondary winding. The autotransformer does not provide galvanic isolation, since it has only one winding.

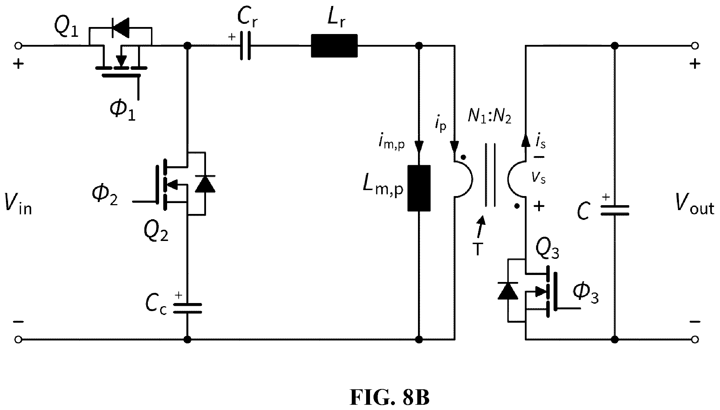

Fig. 8B shows a version of the converter of Fig. 8A in which a transformer (having two windings) replaces the autotransformer of Fig. 8A, to provide galvanic isolation between the input and output. The circuits of Figs. 8A and 8B are otherwise substantially identical. In Fig. 8B, the transformer T has a primary winding with $N_1$ turns and a secondary winding with $N_2$ turns.

In the example of Figure 8A, the magnetizing inductor $L_m$ is represented in parallel to the primary winding of the autotransformer (that is, the winding identified by $N_1+N_2$ turns, according to the convention for an autotransformer). In the isolated version of Fig. 8B, $L_m$ is again represented in parallel to the primary winding ($N_1$ turns according to the convention for a transformer). Equivalently, the magnetizing inductor could be represented in parallel to the secondary winding ($N_2$ turns in both cases). However, the value of the inductance should be scaled by the square of the turns ratio, when referenced to the secondary side / secondary winding.

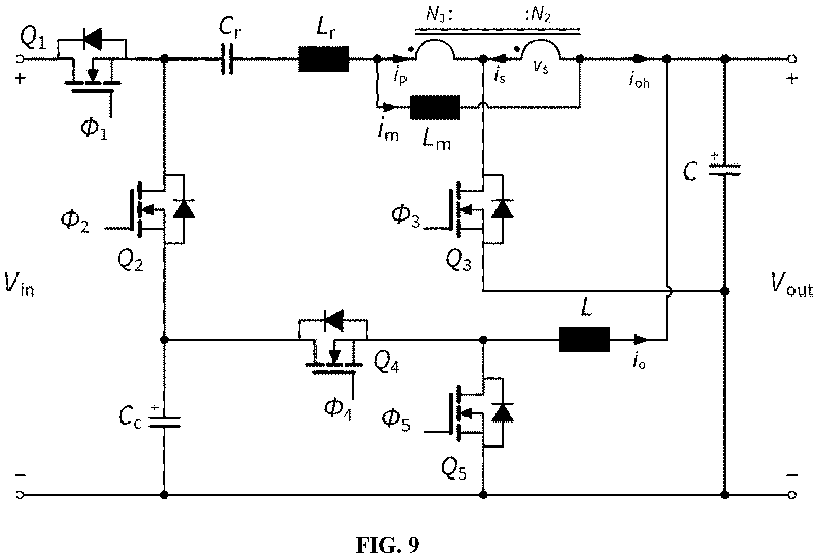

Continuing the present example, the implementation of the regulated PWM converter 220 is a non-isolated synchronous buck converter. This provides a low-component count and is controllable by means of established control schemes. Fig. 9 shows the combination of this synchronous buck converter with the hybrid converter of Fig. 8A. (A similar circuit may be constructed based on the example of Fig. 8B.)

The synchronous buck converter comprises a fourth switching element $Q_4$ and a fifth switching element $Q_5$, connected in series with one another, but in parallel to the reservoir capacitor $C_c$. The reservoir capacitor therefore provides the input voltage to the synchronous buck converter. The fourth switching element $Q_4$ acts as a high side switching element and the fifth switching element $Q_5$ acts as a low side switching element. An inductor L is connected to a node where the source terminal of the fourth switching element Q4 connects to the drain terminal of the fifth switching element Q5. The other terminal of the inductor L is connected to the output. As explained already with reference to Fig. 4A, the input of the synchronous buck converter is in series with the input of the semi-resonant hybrid converter. The outputs of the two converters are in parallel.

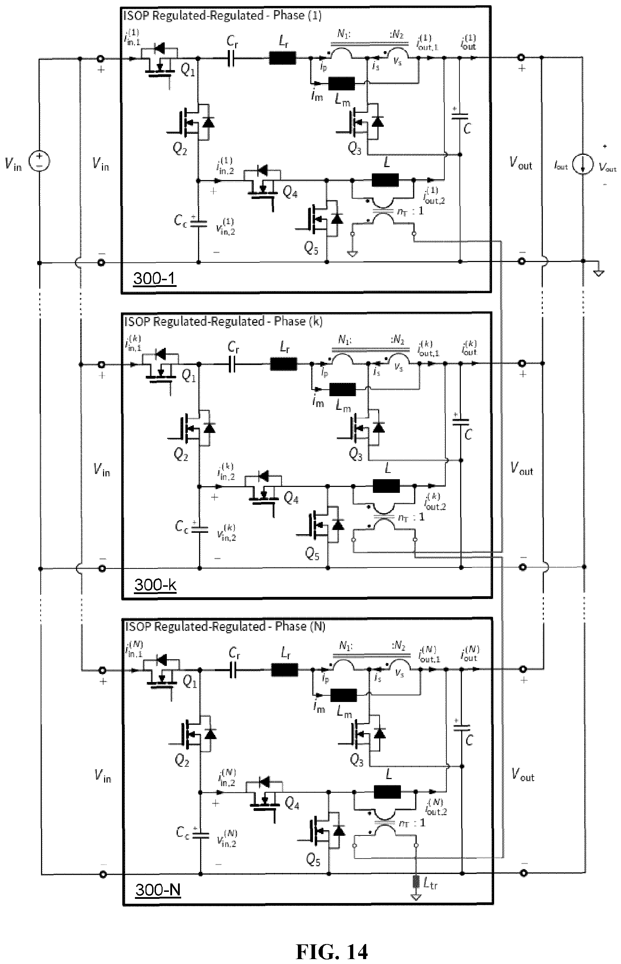

In fact, the capacitor $C_c$ - part of the hybrid converter topology - now also plays the role of the reservoir capacitor facilitating the ISOP connection. In this way, the circuit of Fig. 9 represents one implementation of the generic building-block power converter circuit 200 in Fig. 4A (as also used in the IPOP configuration of Fig. 5). The buck converter (which is the regulated PWM converter 220 in this example) is considered in Fig. 9 in its simplest implementation. Other implementations are possible. For instance, across the $N$ phases, a coupled-inductor or a trans-inductor voltage regulator (TLVR) inductor implementation for $L$ may be used. This will be described in more detail later below, with reference to Fig. 14.

The operation of the power converter circuit of Fig. 9 will now be described, with reference to four time-intervals.

**Time interval $t_0$ to $t_1$**

At $t = t_0$, switch $Q_1$ is turned-on. Turn on can happen either with hard-switching or with zero-voltage-switching (ZVS). During this interval, energy from the input source $V_{in}$ is delivered to the load via the tapped inductor. The series capacitor $C_r$ is an energy-transferring capacitor, which is also charged by the input source during this phase. Negligible voltage ripple is assumed to build-up on top of its steady-state DC voltage, $V_{Cr}$ (small-ripple approximation). In such a scenario, the current in the inductor ($L_m$) rises linearly:

$$i_m(t) = i_m(t_0) + \frac{V_{in} - V_{C_r} - V_{L_r} - V_{out}}{L_m} t \qquad (1)$$

The inductance $L_m$ in Equation 1 is associated with the primary winding of the tapped inductor i.e., with the total ($N_1 + N_2$) number of turns. It is worthwhile to note that with this particular choice, the inductors $L_r$ and $L_m$ are effectively in series during the subinterval $[t_0, t_1]$, so that Equation 1 can be equivalently written as follows:

$$i_r(t) = i_m(t) = i_m(t_0) + \frac{V_{in} - V_{C_r} - V_{out}}{L_r + L_m} t \qquad (2)$$

The change in flux linkage in the two inductors is then:

$$\Delta\varphi_{r\,[t_0,t_1]} = \frac{V_{in} - V_{C_r} - V_{out}}{1 + \frac{L_m}{L_r}} (t_1 - t_0) \qquad (3)$$

$$\Delta\varphi_{m\,[t_0,t_1]} = \frac{V_{in} - V_{C_r} - V_{out}}{1 + \frac{L_r}{L_m}} (t_1 - t_0) \qquad (4)$$

Stored energy in the inductor $L_m$ rises accordingly. Because of the linearly increasing current, the voltage across capacitor C, rises as a parabola.

As there is no restriction in choosing different switching frequencies for the two converters part of the ISOP connection, two different states of operation must be considered for the regulated converter during $[t_0, t_1]$.

a) The regulated PWM converter is powering the load from the reservoir capacitor $C_c$. $Q_4$ is on, while $Q_5$ is off. Energy is transferred from the reservoir $C_c$ to the load and output inductor L. Assuming negligible ripple in $C_c$, the current in the inductor L rises linearly:

$$i_o(t) = i_o(t_0) + \frac{V_{in,2} - V_{out}}{L} t \qquad (5)$$

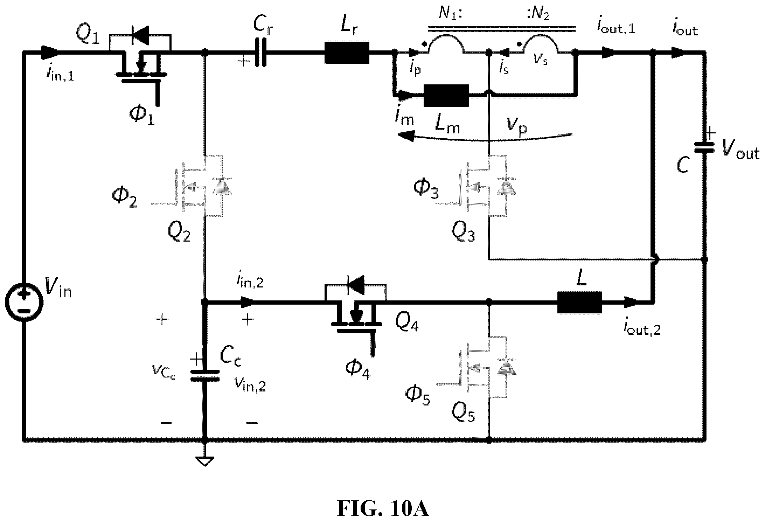

Here, $V_{in,2}$ is the steady-state DC voltage maintained across the input of the PWM converter, that is the voltage across the reservoir capacitor $C_c$. This state is illustrated in Fig. 10A. The inactive switching elements are shown in grey.

b) The reservoir source $C_c$ is left floating as the inductor current is freewheeling. $Q_4$ is off, while $Q_5$ is on. The current in the output inductor of the PWM converter ramps down linearly according to:

$$i_o(t) = i_o(t_0) - \frac{V_{out}}{L} t \qquad (6)$$

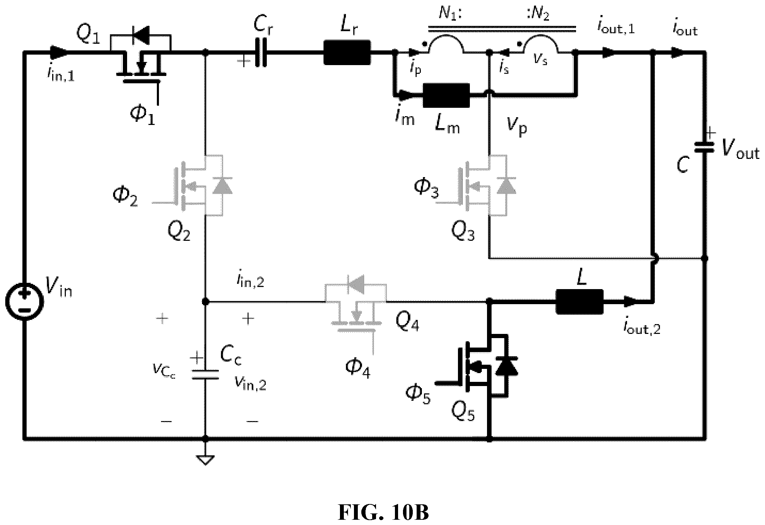

There is no change in the voltage of the reservoir capacitor $C_c$ as this is electrically disconnected from any source or load during this sub-interval. This state is illustrated in Fig. 10B. Again, the inactive switching elements are shown in grey.

It is worth noting that there is nothing preventing the PWM converter from transitioning several times from the powering to the freewheeling phases during the subinterval $[t_0, t_1]$ for which the hybrid converter is continuously powering the load. This is solely dependent on the choice of the respective switching frequencies of the two converters. This freedom in selecting the switching frequencies also allows for the possibility that $f_{sh} = f_s$ (that is, that the switching frequencies of the hybrid and PWM converters are the same). When this is the case, the two scenarios described above should still be considered. The operation of the two converters could be in phase, in phase opposition or out of phase by an arbitrary phase angle such that the transition from scenario a) to b) happens during the subinterval $[t_0, t_1]$ depending on the respective duty ratios of the converters.

During this subinterval, the reservoir capacitor $C_c$ is, on average, discharged with constant power - that is, the portion of the output power processed by the regulated converter ($P_o$), taking its efficiency $\eta$ into account:

$$i_{C_c} = C_c \frac{dv_{in,2}}{dt} = \frac{\langle p_i \rangle_{T_s}}{v_{in,2}} = \frac{P_o}{\eta v_{in,2}} \Rightarrow v_{C_c}(t) = v_{in,2}(t) = \sqrt{V_{in,2}^2 - \frac{2P_o}{\eta C_c} t} \qquad (7)$$

In order to keep delivering the power to the load, the average current drawn from the reservoir capacitor $C_c$ has to increase, and so does the duty ratio of the regulated converter. Reservoir capacitor $C_c$ is designed large enough to maintain the stable operation of the whole converter.

**Time interval $t_1$ to $t_2$**

At $t = t_1$, switch $Q_1$ is turned-off, while switch $Q_2$ is kept off. The hybrid converter enters the dead-time mode of operation. The non-zero current flowing in inductors $L_r$, $L_m$ at time instant $t_1$ is responsible for depleting the output capacitance $C_{oss,2}$ of the low-side switch $Q_2$. Once the $C_{oss}$ is completely depleted, the body diode of $Q_2$ becomes forward biased and the current freewheels across it. This assumes that the switch is realized with a MOSFET. Equivalently, $Q_2$ may be realized with any current-bidirectional device operating at least over two-quadrants (for example, a GaN HEMT, IGBT co-packaged with a diode, etc.).

As the equivalent output capacitance for switch $Q_2$ is depleted, the voltage across the tapped inductor collapses. Once the $Q_2$ device enters the 3rd quadrant mode of operation, this voltage becomes:

$$V_p = V_{C_c} - V_{C_r} - V_{L_r} - V_{out} = -V_{SD} \qquad (8)$$

At the same time, the voltage across the synchronous rectifier switch $Q_3$ falls, following the reflected voltage across the tapped winding, $v_s$. Its equivalent output capacitor $C_{oss,3}$ is discharged and eventually the body diode of $Q_3$ becomes forward biased. Again, this assumes that the switch is realized with a MOSFET. Equivalently, $Q_3$ may be realized with any current-bidirectional device operating at least over two-quadrants. The secondary winding of the tapped inductor becomes effectively clamped at the output voltage $V_{out}$ plus the source-drain voltage of $Q_3$ (either the body-diode forward drop in case of a MOSFET implementation or the $V_{SD}$ threshold for a GaN HEMT).

Then the expression for the voltage $V_p$ across the tapped inductor evaluates to:

$$V_p = -n(V_{out} + V_{SD}) \qquad (9)$$

Where n = $(N_1+N_2)/N_2$. The magnetizing current $i_m$ falls accordingly.

As in the interval $[t_0, t_1]$, also in the interval $[t_1, t_2]$ two different states of operation are possible and will be considered for the regulated converter.

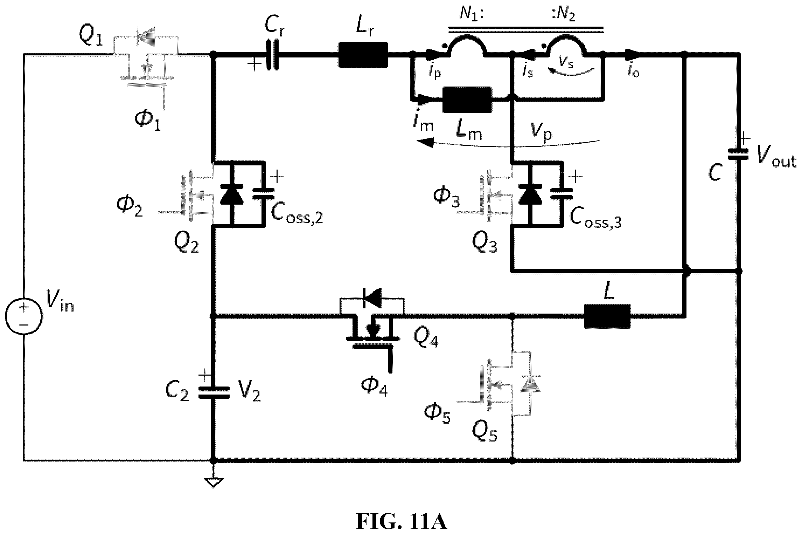

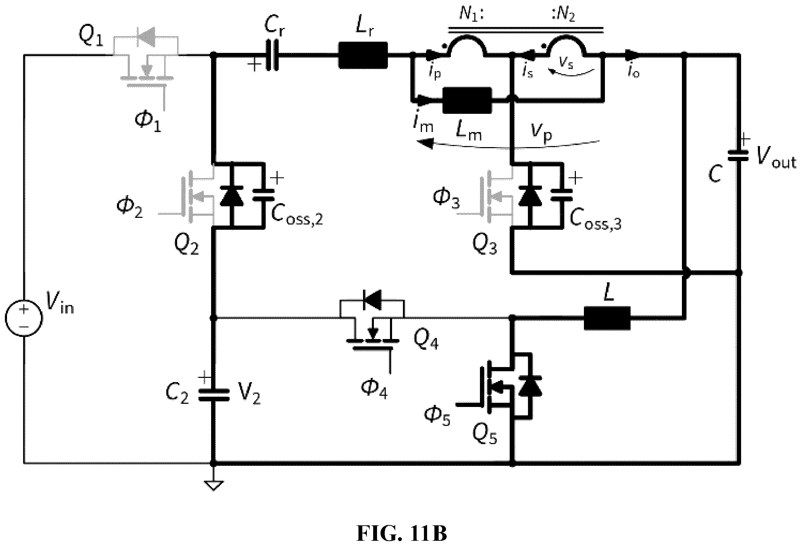

    a) The regulated converter is powering the load from the reservoir source $C_c$ (see Fig. 11A).
    b) The reservoir source $C_c$ is left floating as the inductor current is freewheeling (see Fig. 11B).

The interval ends at $t_2$ with the end of the dead-time mode of operation for the hybrid converter.

**Time interval $t_2$ to $t_3$**

Several scenarios can be considered for this subinterval, depending on the control strategy adopted for the synchronous rectifier switch $Q_3$. For the sake of brevity, the case for which the low-side and the synchronous rectifier switches share the same control signal, i.e., $\Phi_2 = \Phi_3$ will now in detail. Nevertheless, it should be apparent to those skilled in the art that other control strategies can be used.

At $t = t_2$, switches $Q_2$ and $Q_3$ are turned on with zero-voltage-switching (ZVS). The secondary winding of the tapped inductor is tied to the output voltage with $V_s = -V_{out}$. The voltage $V_p$ across the whole tapped inductor is then:

$$V_p = -nV_{out} \qquad (10)$$

The change in the magnetizing inductor flux linkage is:

$$\Delta \varphi_{m[t_2,t_3]} = -nV_{out}(t_3 - t_2) \qquad (11)$$

The tapped inductor together with $C_r$, $L_r$, C and $C_c$ realize a series-resonant circuit. Note that $L_r$ lumps any other series inductance, e.g., the tapped-inductor leakage inductance, capacitor equivalent series inductance (ESL) and any other source of stray inductance. As C and $C_c$ are large capacitances, they can be treated as DC sources, to a first approximation. Then the analysis of the resonance reduces to $C_r$, $L_r$ only. To keep the analysis simple, any source of series resistance has been neglected.

$$v_{C_r} + v_{L_r} = V_{C_C} + (n-1)V_{out} \Rightarrow \frac{di_r}{dt} + L_r C_r \frac{d^2 i_r}{dt^2} = 0 \Leftrightarrow \frac{d^2 i_r}{dt^2} + \omega_0 \frac{di_r}{dt} = 0 \Rightarrow \qquad (12)$$
$$i_r(t) = A\sin(\omega_0 t + \Phi)$$

Here, A and $\Phi$ are generic constants, found upon the application of the opportune initial conditions and/or by imposition of charge and flux balance conditions over the resonant capacitor and inductor. A and $\Phi$ also depend on the control strategy adopted - for example, requesting ZCS for the synchronous rectifier switch $Q_3$ at $t = t_3$. To a first approximation, the magnitude of the sinusoidal current, A, can be assumed higher than but comparable to the peak magnetizing current. During this phase, the load is powered via the tapped-inductor which, by compensating the ampere-turns applied at the primary winding, acts as a transformer:

$$i_{oh} = \frac{N_2}{N_1} A \sin(\omega_0 t + \Phi) + \left(\frac{N_2}{N_1} + 1\right) i_m$$

$$i_{Q_3} = \left(\frac{N_2}{N_1} + 1\right) \left[A \sin(\omega_0 t + \Phi) + i_m\right]$$

$$(13)$$

Also depending on the turn ratio, a larger portion of the power may be transferred to the load during this subinterval.

From Equation 13, it is also possible to write an approximate expression for the resonant inductor flux linkage, which assumes the small-ripple approximation to hold true (which, in general, is not valid for resonant converters):

$$\Delta\varphi_{r[t_2,t_3]} = \left[V_{C_c} - V_{C_r} + (n-1)V_{out}\right](t_3 - t_2) \qquad (14)$$

Intervals [$t_0$, $t_1$] and [$t_2$, $t_3$] (together with the respective dead-times) define a switching cycle $T_{sh}$ for the hybrid converter. By defining a duty ratio $D_h$ as the fraction of switching period $T_{sh}$ for which the switch $Q_1$ is on, and by applying the flux balance over both the $L_m$ and $L_r$ inductors, it is possible to find the steady-state conversion ratio $M=V_{out}/V_{in}$ of the ISOP converter:

$$M(D_h) = \frac{D_h \left(1 - \frac{V_{C_c}}{V_{in}}\right)}{n \left(1 + \frac{L_r}{L_m}\right)} \qquad (15)$$

On the one hand, the conversion gain is directly proportional to the duty cycle $D_h$ of the hybrid converter, so that the output voltage can be controlled by duty cycle, as in a conventional PWM converter. On the other hand, the turns ratio of the tapped-inductor ($n$), the ratio of the resonant to the magnetizing inductance ($L_r/L_m$) and the ratio of the regulated converter input voltage to the overall input voltage ($V_{in,2}/V_{in}$) are acting as parameters.

The turns ratio for the tapped inductor and ratio of the resonant to the magnetizing inductance ($L_r/L_m$) are defined by design and can be used to choose the required down conversion ratio. The ratio of the regulated converter input voltage to the overall input voltage ($V_{in,2}/V_{in}$) can be controlled usefully, as it regulates the average power processed by the hybrid and the PWM converters in the ISOP connection. In general, the following relationship holds for the conversion ratios for the two converters in the ISOP connection:

$$\begin{aligned} M(D_h) &= \frac{V_o}{V_{in}} \\ M_r(D) &= \frac{V_o}{V_{in,2}} \end{aligned} \quad \Rightarrow \quad \frac{V_{in,2}}{V_{in}} = \frac{M_h}{M_r} \qquad (16)$$

Assuming continuous current mode (CCM) operation, this identifies a dependency among the duty cycles for the hybrid and the PWM converters:

$$\frac{V_{in,2}}{V_{in}} \propto \frac{D_h}{D} \qquad (17)$$

In other words, requiring a certain $V_{in,2}/V_{in}$ ratio puts a constraint in the ratio of the duty cycles of the two converters.

The duration of the off time can be chosen such that, for example, the synchronous rectifier switch $Q_3$ turns off in zero current switching. The ZCS condition for $Q_3$ can be found from Equation 18, that is:

$$i_r(t_3) = -i_m(t_3) \qquad (18)$$

There is no restriction on adopting different control schemes, which do not guarantee the ZCS condition for $Q_3$. Such control schemes can be applied as well. For example, to allow the synchronous rectifier (SR) switch $Q_3$ to operate in ZCS independently of the operating point of the converter, a variable frequency control with constant-off-time $T_{off}$ for the

switch $Q_1$ can be implemented for the hybrid converter. In general terms, the off-time $T_{off}$ can also be modulated. Modulating the off time allows, for example, to a) compensate for the shift in the ZCS condition caused by any shift in the magnetizing current due to line and load conditions and/or b) achieve ZVS for the switch $Q_1$ over a larger portion of the output load. The duty cycle of the regulated hybrid converter can then be indirectly controlled by modulating its switching frequency $f_{sh}$.

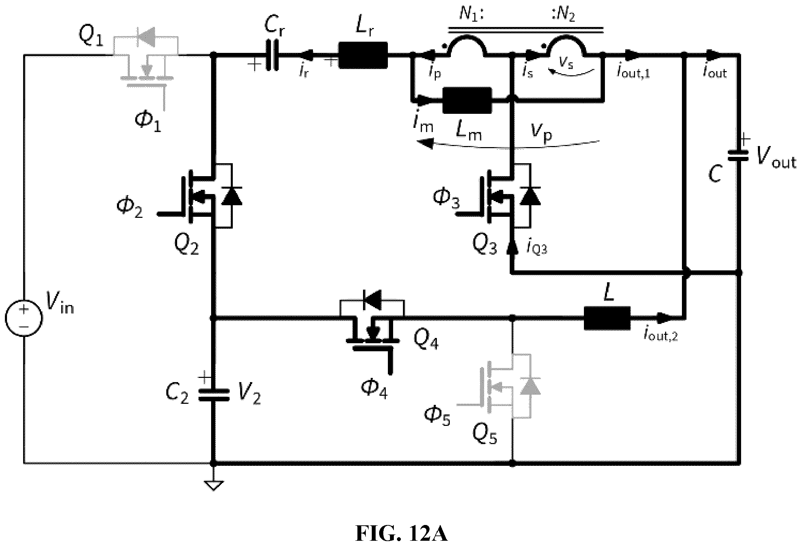

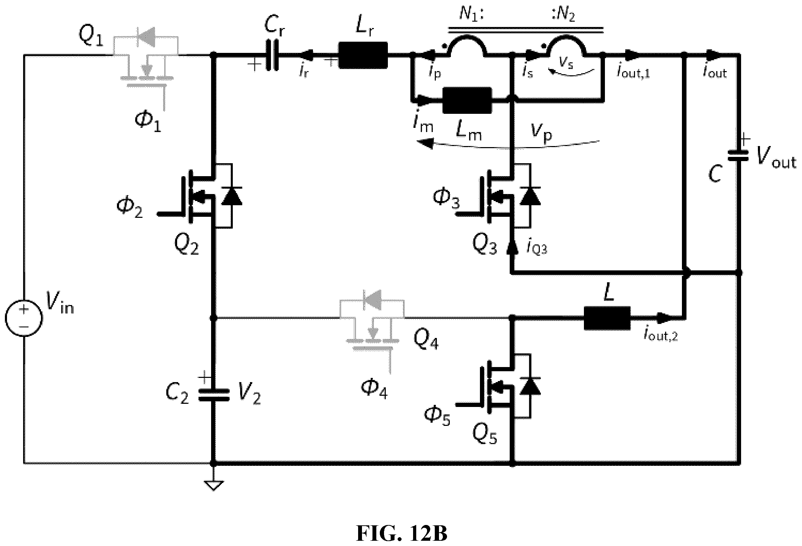

Fig. 12A shows a state during resonant operation of the hybrid converter while the regulated converter is powering the load. Fig. 12B illustrates resonant operation of the hybrid converter while the inductor current in the regulated converter is freewheeling.

**Time interval $t_3$ to $t_4$**

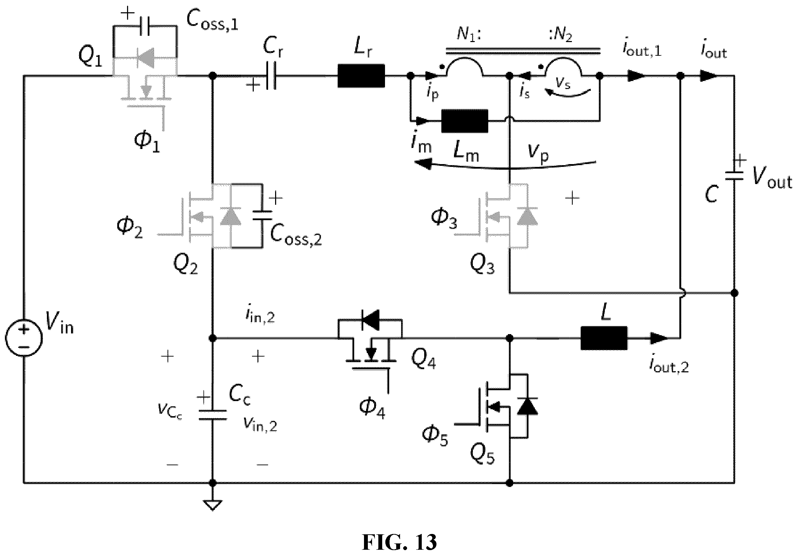

Several scenarios can be considered for this subinterval, depending on the control strategy adopted for the synchronous rectifier switch $Q_3$. For the sake of brevity, the case for which the low-side and the synchronous rectifier switches share the same control signal (that is., $\Phi_2 = \Phi_3$) will now be described in detail. At $t = t_3$, switches $Q_2$ and $Q_3$ are turned-off, while switch $Q_1$ is kept off. The hybrid converter enters the dead-time mode of operation. This is illustrated in Fig. 13

The current flowing in inductors $L_r$, $L_m$ at time instant $t_3$ is responsible for depleting the output capacitance $C_{oss,1}$ of the high-side switch $Q_1$, while charging the output capacitance $C_{oss,2}$ of the low-side switch $Q_2$.

If it results that $i_m(t_3) < 0$, then the process is dominated by the energy stored in the magnetizing inductor $L_m$. To fully achieve ZVS for $Q_1$, the energy stored in $L_m$ at $t_3$ must be $> 0.5(Q_{oss,1}+Q_{oss,2})\ V_{in}$. As $L_m$ is relatively large in the present example, it acts as a current source, feeding the output capacitors of the $Q_1$, $Q_2$ MOSFETs.

If $i_m(t_3) \geq 0$, then an eventual full or partial ZVS condition for $Q_1$ can happen if $i_r(t_3) < 0$ (thanks to the energy stored in the resonant inductor $L_r$). To fully achieve ZVS for $Q_1$, the energy stored in $L_r$ at $t_3$ must be $> 0.5(Q_{oss,1}+Q_{oss,2})\ V_{in}$. As $L_r$ is relatively small in the present example, the process results in a resonance with the output capacitors of the $Q_1$, $Q_2$ MOSFETs. By controlling the value of $i_r(t_3)$ by modulation of the off-time, it is then possible to broaden the ZVS range of $Q_1$ across line and load.

If the $C_{oss}$ is completely depleted, the body diode of $Q_1$ becomes forward biased and the current can freewheel across it. This assumes that the switch is realized with a MOSFET. Equivalently, $Q_1$ may be realized with any current-bidirectional device operating at least over two-quadrants (likewise a GaN HEMT).

At $t = t_4$, switch $Q_1$ is turned on and a new cycle begins again.

The buck converter shown in Fig. 9, and analyzed with reference to Figs. 10A to 13, was considered in its simplest implementation. However, it should be understood that this is not limiting on the scope of the present disclosure. Fig. 14 shows a variant of the circuit of Fig. 5, in which a trans-inductor voltage regulator (TLVR) is used to implement the inductor $L$ in each buck converter. As is apparent in Fig. 14, the topology of each ISOP block (each power converter circuit 300-1, 300-k, 300-N) is almost identical to the topology illustrated in Fig. 9. However, the inductor L of each regulated PWM converter (buck converter) is magnetically coupled to another inductive element. These inductive elements are connected together in series, providing indirect coupling between the power converter circuits 300-1, 300-k, 300-N of the different phases.

This type of TLVR configuration can be extended to handle multiple regulated PWM converters in each ISOP building-block (that is, in each power converter circuit 300-1, 300-k, 300-N), as desired. For example, every regulated PWM converter (in every power converter circuit) could have its inductor magnetically coupled to the series TLVR connection.

**Control strategies**

Control strategies for circuits of the types disclosed above will now be described.

For each ISOP building block (for example, each power converter circuit 200, 300), at least two power converters are provided in a parallel arrangement at their output ports. This means the total output power of each ISOP building block is split among multiple paths.

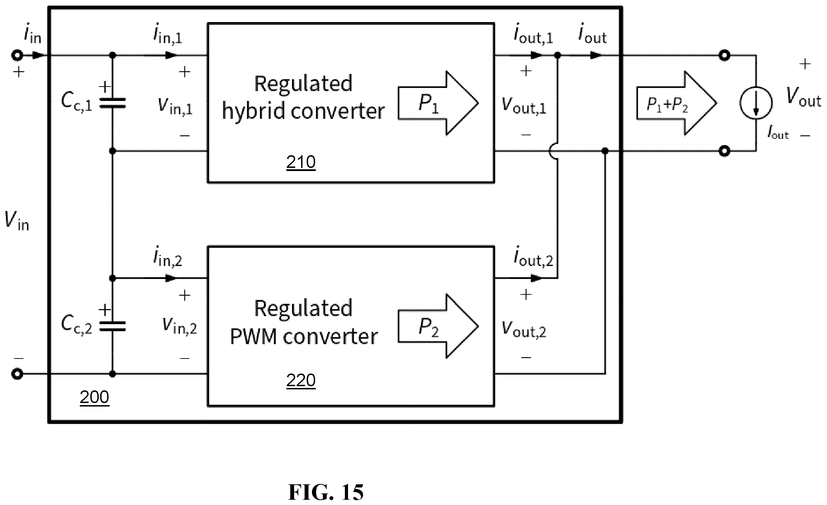

In Fig. 15, the elementary case with two regulated power converters is shown, where the regulated hybrid converter delivers power in the amount of $P_1$ and the regulated PWM converter delivers power in the amount of $P_2$. For high-efficiency converters, the output power can be approximated with the input power. As the input current is the same for both converters, $P_1$ and $P_2$ are:

$$P_1 = V_{in,1}\langle i_{in}\rangle$$

$$P_2 = V_{in,2}\langle i_{in}\rangle$$

This means that the processed power ratio $P_1/P_2$ corresponds to the input voltages ratio.

A power sharing loop is provided. This can be designed to implement one of a variety of strategies. Two possible example strategies are as follows:

1. Maintain a certain set-point of $P_1/P_2$, for example to ensure $P_1 >> P_2$ with a slow time-constant (low bandwidth). This can be achieved by measuring $v_{in,1}$ and $v_{in,2}$, $V_{in}$ and $v_{in,1}$ or $V_{in}$ and $v_{in,2}$.

2. Control the voltage $v_{in,1}$ or $V_{in,2}$ to a fixed setpoint. If there is a wide input voltage $V_{in}$ range, this will result in a non-constant and input-voltage-dependent power sharing ratio between the two converters. This strategy may be useful, for example, if the PWM converter is optimized such that it can be operated with higher efficiency given a narrower input voltage range.

In general terms, the power sharing control loop may be configured such that, on average over the N phases (as in Fig. 5, for example), $\langle v_{in,2}^{(n)} \rangle = \rho \langle v_{in,1}^{(n)} \rangle$ for each phase n = 1, ..., k , ..., N. Treating $V_{in}$ as an ideal voltage source, this objective is the same as specifying that the $\langle v_{in,2}^{(n)} \rangle$ are, on average, equal to a certain setpoint $V_{in,2}^*$. In other words, the objective of this loop is to ensure that $\langle \overline{v_{in,2}} \rangle \triangleq \frac{1}{N} \sum_{n=1}^{N} \langle v_{in,2}^{(n)} \rangle = V_{in,2}^*$. The setpoint $V_{in,2}^*$ can be either variable or fixed depending on the control strategy to be adopted (for example, according to one of the two options listed above). According to the present implementation, the controller fixes the power sharing at the setpoint only on average, and not strictly on a phase-by-phase basis. This permits each of the N phases to have a different power sharing ratio between the hybrid converter and the PWM converter. The aim of this is to allow each phase to slightly adjust the voltage on the respective reservoir capacitor $\langle v_{C_c}^{(n)} \rangle = \langle v_{in,2}^{(n)} \rangle$ around the average setpoint $V_{in,2}^*$, as discussed earlier above.

In other examples according to the present disclosure, it is contemplated to achieve a similar control goal by regulating, on average over the N phases, the input voltages of the hybrid converters $\langle v_{in,1}^{(n)} \rangle$ to a certain setpoint $V_{in,1}^*$ by applying similar considerations to those above.

In general, as $v_{in,1}$ and $V_{in,2}$ are voltages measured across the inputs of DC-DC converters, they are continuous, slowly-varying quantities. Thus, the averaging operators over the switching period so far formally considered, can be dropped without impacting the control strategy.

Consider a unidirectional power flow from input source to output load. Each reservoir capacitor $C_{c,x}$ can be charged by the input current flowing in the hybrid converter and discharged from the input current flowing in the PWM converter. The average input current of the PWM converter is a function of the duty ratio. In case a semi-resonant regulated hybrid converter is considered, then also its average input current is a function of its own duty ratio. Consequently, two different control strategies are possible, one of which involves duty modulation in the hybrid converter and the other of which involves duty modulation in the PWM converter.

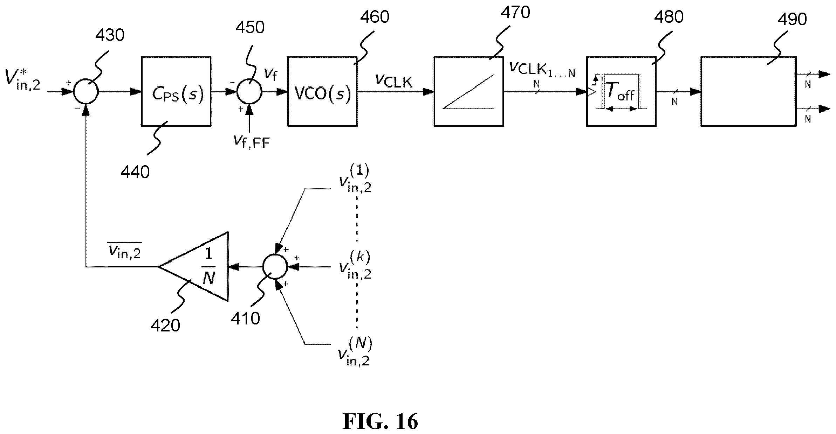

Fig. 16 illustrates one possible implementation of the control strategy discussed above. In this implementation, the control action is performed using the semi-resonant hybrid converter. It is supposed that the current resonance takes place during the off-time of the control switch or switches (for example, $Q_1$ in Fig. 9). Then, an appropriate constant-off-time modulation strategy (as described previously above) is implemented. The off-time $T_{off}$ can be also adaptive (modulated) in general.

The part of the controller illustrated in Fig. 16 comprises an adder 410, a gain 420, a first subtractor 430, a power sharing compensator 440, a second subtractor 450, a voltage controlled oscillator (VCO) 460, a phase shifter 470, a monostable multivibrator (one-shot) 480, and a signal generator 490. The adder 410 receives, as inputs, a measurement of the input voltage of each of the PWM converters - that is, the voltage across each reservoir capacitor $C_c$. The output of the adder 410 is the sum of these voltages. The input of the gain 420 receives the output of the adder 410. It scales the sum of the voltages by a factor 1/N, so that the output of the gain 420 is the average (mean) of the N voltage measurements input to the adder 410. At the first subtractor 430, this average measurement is subtracted from the corresponding average voltage setpoint $V_{in,2}^*$. The output of the first subtractor 430 is input to the power sharing compensator 440. The output of the power sharing compensator 440 is compared with (subtracted from) a feed-forward voltage $v_{f,FF}$ at the second subtractor 450.

The feedforward term is a calculated signal which aims to anticipate and directly compensate for known disturbances or inputs to the system. Unlike feedback terms, the feedforward term does not depend on the output of the system. In many practical applications, feedforward control is used in conjunction with feedback control to achieve more comprehensive and robust control of the system. In the present example, the feedforward voltage may be a function of the output current, which may be considered an input to the control system. In this way, the controller can rapidly adjust the control action to respond to a load transient, before waiting for the effect of the load transient to manifest onto the feedback variable (in this case, the average $\overline{v_{in,2}}$ of the measured input voltages).

The output of the second subtracter 450 is provided as input to the VCO 460, which produces a clock signal whose frequency $f_{SH}$ depends on the input to the VCO. This clock signal - consisting of a series of pulses at a switching frequency $f_{SH}$ - is provided to the phase shifter 470, which produces N phase-shifted versions of it, with phase shifts defined by:

$$\theta_n = (n-1)\frac{2\pi}{N}$$

(It should be noted that the first of these has a phase shift of zero; therefore, it corresponds to the original clock signal produced by the VCO.) The N clock signals are provided to the monostable multivibrator 480, which replaces each pulse of each clock signal with a corresponding pulse of predetermined width. The N pulse-trains output by the monostable 480 are provided as input to the signal generator 490. The signal generator 490 generates the complementary signals for the control switches $Q_1$, the low side switching elements $Q_2$, and the synchronous rectifier switches $Q_3$ of each hybrid converter. Appropriate dead times are introduced in the complementary control signals, to prevent shoot-through currents.

This arrangement provides for frequency modulation of the hybrid converters. The off-time of the control switch $Q_1$ in each hybrid converter is determined by the monostable multivibrator 480. This can be either fixed or adapted. The duty ratio of the control signals is modulated indirectly.

If for example, the average voltage $\overline{v_{in,2}}$ is lower than the setpoint $V_{in,2}^*$, the switching frequency of the hybrid converters $f_{sh}$ is reduced such that the duty cycle $d_h$ increases for a constant $T_{off}$. As the input current of each of the N hybrid converters is proportional on the duty $d_h$, then an excess current flows into the N reservoir capacitors, resulting in an increase in the average voltage $\overline{v_{in,2}}$. The compensator $C_{PS}(s)$ 440 may be either linear or nonlinear in nature and should ensure that the feedback loop provides the wanted static and dynamic regulation performances, while ensuring the stable operation of the system.

The compensator 400 may comprise (without limitation): a proportional (P) compensator, proportional-integral (PI) compensator, or proportional-integral-derivative (PID) compensator. These are examples of linear control. Alternatively, the compensator may comprise a nonlinear control action - for example, PI or PID with anti-windup, or nonlinear control methods such as hysteresis control.

As explained above, the feedback control scheme also allows for a feed-forward action to be provided.

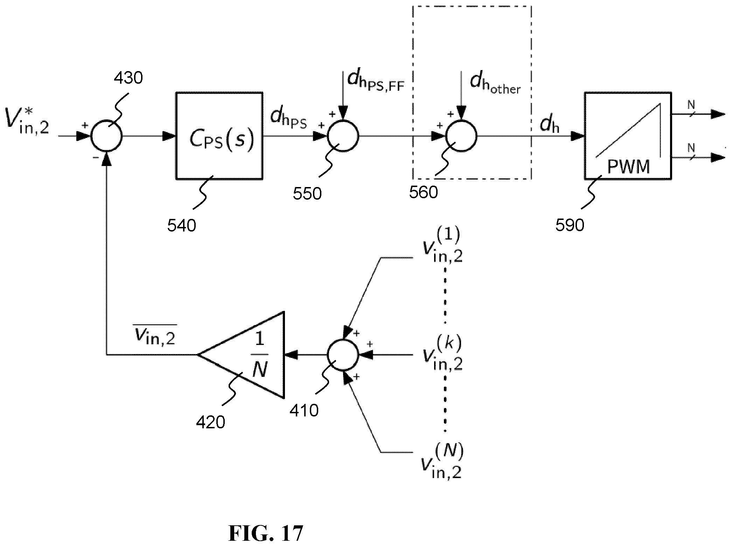

Fig. 17 shows another possible implementation of the control strategy. In this implementation, the control action is again performed using the semi-resonant hybrid converter, which, in this case, is duty-cycle modulated at a fixed switching frequency. Similarly to the example of Fig. 16, the control action is executed by adjusting the duty ratio. The components 410, 420, and 430 function in the same way to their counterparts in Fig. 16. The power sharing compensator 540 differs from the compensator 440 of Fig. 16, according to the different nature of the control scheme. In this case, the loop transfer function differs as the gains of the VCO 460 and of the multivibrator (one-shot) 480 are no longer part of the loop gain, while the signal generator 590 may show a different gain compared to the signal generator 490.

The output of the power sharing compensator 540 is a duty cycle control signal. It is added to a feedforward duty cycle in adder 550. The result of this addition is then added (by adder 560) to a summation of duty contributions from other control loops. This operation is surrounded by a dash-dot box since it may involve multiple adders (not shown separately) which are shared between the control loops. The combined duty signal is provided as input to a signal generator 590, which generates N sets of complementary PWM control signals - one set of complementary PWM control signals for each hybrid converter. The N sets of complementary PWM control signals may be phase-shifted by an angle:

$$\theta_n = (n-1)\frac{2\pi}{N}$$

(It should be noted that the first of these has a phase shift of zero; therefore, it corresponds to the original clock signal produced by the adder 560.) The control signals are generated with the duty cycle defined by the input to the signal generator 590.

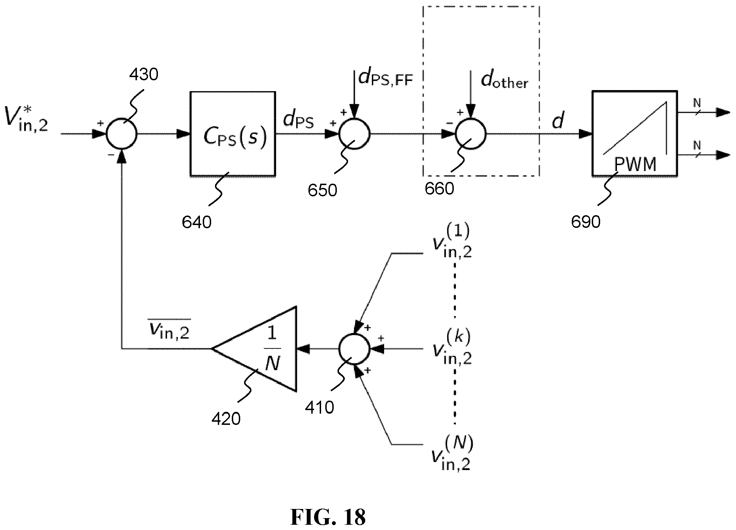

Fig. 18 shows another possible implementation of the control strategy. In this implementation, the control action is performed using the PWM converter. In the illustrated example, the duty-cycle of the PWM converter is modulated at a fixed switching frequency. Components 410, 420, and 430 function in the same way as in Figs. 16 and 17. The controller further comprises a power sharing compensator 640, adder 650, subtractor 660, and signal generator 690 which correspond approximately to the respective components 540, 550, 560, and 590 in Fig. 17.

The output of the power sharing compensator 640 is a duty cycle control signal for the PWM converter. This duty cycle control signal is added to a feedforward duty cycle in adder 650. The result of this addition is then subtracted (using subtractor 660) from a summation of duty contributions from other control loops. The combined duty signal is provided as input to the signal generator 690, which generates N sets of complementary PWM control signals - one set of complementary PWM control signals for each regulated PWM converter. The control signals are generated with the duty cycle d defined by the input to the signal generator 690. As in the examples of Fig. 16 and Fig. 17, the N sets of complementary PWM control signals may include a phase-shift between them.

The control action is executed by adjusting the duty ratio. If, for example, the average voltage $\overline{v_{in,2}}$ is lower than the setpoint $V_{in,2}^*$, the duty cycle d reduces. As the input current of each of the N PWM converters is proportional on the duty $d$, then less current is drawn from the N reservoir capacitors, resulting in an increase in the average voltage $\overline{v_{in,2}}$. The compensator $C_{PS}(s)$ may be either linear or nonlinear in nature and should ensure that the feedback loop provides the wanted static and dynamic regulation performances, while ensuring the stable operation of the system. The feedback control scheme also provides for a feed-forward action to be provided.

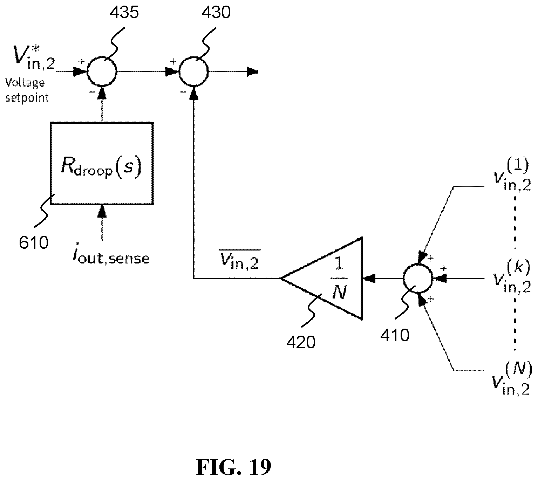

Fig. 19 illustrates a variant of the controllers shown in Figs. 16, 17, and 18. For brevity and simplicity most of the common parts of the controller are omitted. In the example of Fig. 19, the regulated PWM converter is again controlled using duty modulation at a fixed frequency. Droop control over the voltage on the reservoir capacitor is introduced. Block 610 represents a droop function, which can be either a static gain or a dynamic transfer function. The output of the droop function 610 is a voltage signal proportional to the output current that is subtracted (using subtractor 435) from the voltage setpoint $V_{in,2}^*$, before it is compared (at subtractor 430) with the measured average voltage. This can be seen as a particular form of feedforward of the duty cycle.

We now consider exemplary ways to control the output voltage, when multiple ISOP building blocks (e.g. power converter circuits 200) are coupled together in an IPOP arrangement.

As both converters in each ISOP building block are regulated converters, the output voltage can be controlled by either of them - for example, either the regulated hybrid converter 210 or the regulated PWM converter 220. For the PWM converter, the desired control can be achieved either by duty modulation at fixed frequency or with variable frequency control - for example, constant-on-time (COT) control. For the hybrid converter, the desired control can be achieved either by duty modulation at fixed frequency or by frequency modulation in a constant-off-time control strategy.

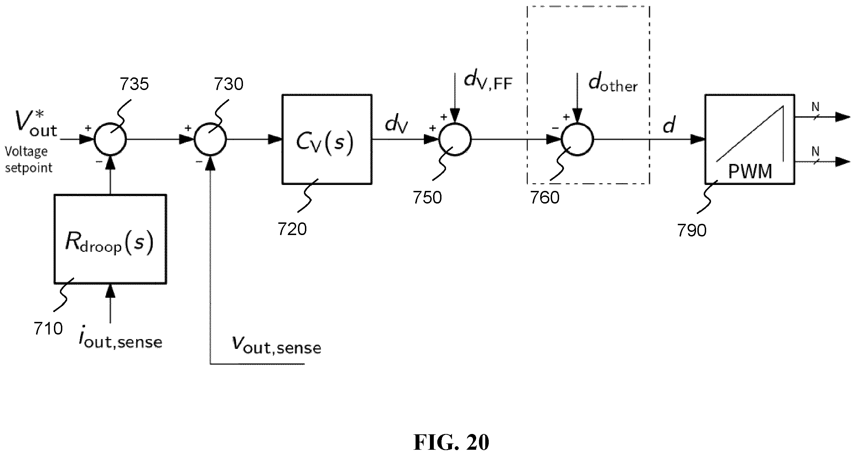

Fig. 20 shows one possible implementation of the control strategy. In this implementation, the control action is performed by the PWM converter, which is in this case duty-cycle modulated at a fixed switching frequency. The control action is executed by adjusting the duty ratio.

Similarly to Fig. 19, this example incorporates droop control. Based on a measurement of the output current, the droop function 710 produces a voltage signal that is subtracted (at subtractor 735) from the voltage setpoint $V_{out}^*$, before it is compared (at subtractor 730) with the measured output voltage. The output of the subtractor 730 is provided as input to an output voltage compensator Cv(s) 720. The compensator Cv(s) 720 may be either linear or nonlinear in nature and should ensure that the feedback loop provides the wanted static and dynamic regulation performances, while ensuring the stable operation of the system.

The output of the compensator 720 is a duty cycle control signal for the PWM converters. This duty cycle control signal is added to a feedforward duty cycle in adder 750. The result of this addition is then subtracted (using subtractor 760) from a summation of duty contributions from other control loops. The combined duty signal is provided as input to a signal generator 790, which generates N sets of complementary PWM control signals - one set of complementary PWM control signals for each regulated PWM converter. The PWM control signals are generated with the duty cycle d defined by the input to the signal generator 790. As before, the N sets of complementary PWM control signals may include a phase-shift between them.

The feedback control scheme exemplified in Fig. 20 can allow for a feed-forward action to be provided, as well as for adaptive voltage positioning (AVP).

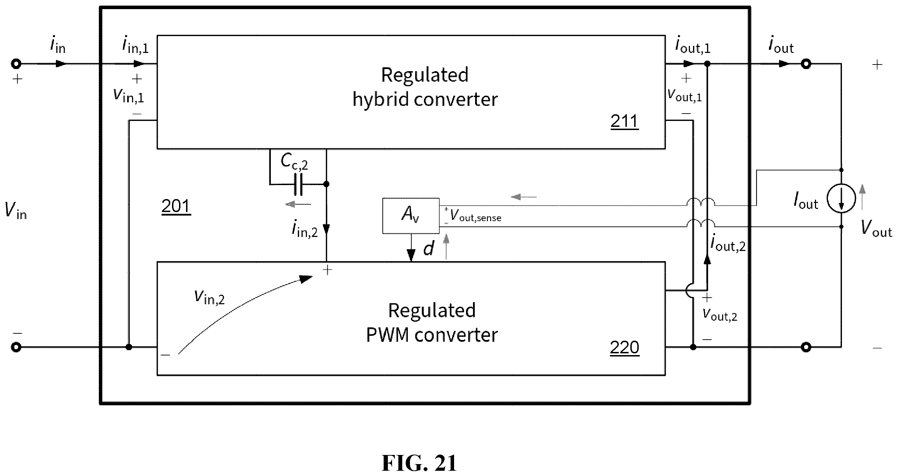

Fig. 21 illustrates one way in which the proposed converter structure can achieve a boost in the transient response of the output voltage during a load current transient. Let us consider the case of a positive load step. Two feedback mechanisms are involved.

Firstly, the closed-loop control of the output voltage (as described above with reference to Fig. 20), is increasing the duty cycle *d* in response to the decrease recorded in the output voltage because of the transient event. As the output voltage is dropping, most of the additional load current will be provided by the regulated hybrid converter 210. Its small output impedance (mostly real in nature) can facilitate a natural response with respect to the voltage drop. The PWM converter 220 (a buck converter in this example) cannot increase its output current instantaneously.

Secondly, as the buck converter increases its duty cycle, the voltage of the reservoir capacitors $C_c$ will drop, as indicated in Fig. 21. Reducing the voltage across the reservoir capacitors increases the power drawn by the hybrid converter as its input voltage increases accordingly. This will further boost the output current provided by the hybrid converter stage, enabling a faster response to load transients.

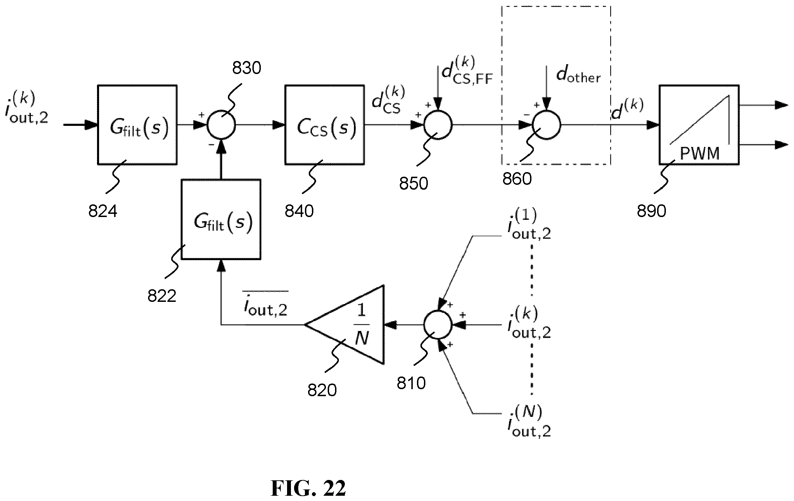

The average output currents in the regulated PWM converters in the *N* phases can be equalized by means of a load current sharing controller. A possible implementation is a democratic load current sharing (for example, a current share bus) as illustrated in Fig. 22. The control action in this example uses duty modulation of the regulated PWM converters at a fixed switching frequency.

The part of the controller illustrated in Fig. 22 comprises a first adder 810, a gain 820, a first subtractor 830, a current sharing compensator 840, a second adder 850, a second subtractor 860, and a signal generator 890. It also includes two optional filters/pre-filters 822, 824. The first adder 810 receives, as inputs, a measurement of the output current of each of the PWM converters. The output of the adder 810 is the sum of these measured currents. The input of the gain 820 is connected to the output of the adder 810. The gain 820 scales the sum of the currents by a factor 1/N, so that the output of the gain 820 is the average (mean) of the N current measurements input to the adder 810. Optionally, this average is filtered by filter 822. The (optionally filtered) average current signal is provided to an inverting input of the first subtractor 830. The non-inverting input of the first subtractor 830 receives a measurement of the output current of the regulated PWM converter ("k") to be controlled. (Optionally, this measurement is temporally pre-filtered by the filter 824.)

Filter blocks 822 and 824 are generally designed to have distinct transfer functions. This enables the realization of a closed-loop control scheme with two degrees of freedom, as the signal transfer from the reference to the output and from the feedback to the output can be adjusted differently to achieve control robustness, noise attenuation, or improved dynamic response. The output of the first subtractor 830 is the difference between the individual output current measurement for the PWM converter of phase k, and the average output current. The output of the first subtractor 830 is provided as input to the current sharing compensator 840. The output of the current sharing compensator 840 is a duty cycle control signal. Optionally, this is added to a feed-forward duty cycle, at the second adder 850. If implemented, the result of this addition, output by the second adder, is then subtracted from a summation of duty contributions from other control loops, at second subtractor 860. If the second adder 850 (for feedforward control) is not implemented, then the output of the current sharing compensator 840 may be provided directly to the second subtractor 860. The combined duty signal generated by the second subtractor 860 is passed to the signal generator 890, which generates a set of PWM control signals for the PWM converter in question (that is, the PWM converter for phase k).

The compensator Ccs(s) should ensure that the feedback loop provides the wanted static and dynamic regulation performances, while ensuring the stable operation of the system. In the example of Fig. 22, the control scheme acts to equalize the average output currents in the regulated PWM converters in the N phases. (Here, each "phase" refers to one of the N IPOP-connected power converter circuits 200.) However, this is not essential. In another example, it is possible that the average total output currents ($i_{out,1} + i_{out,2}$) in the *N* phases may be equalized.

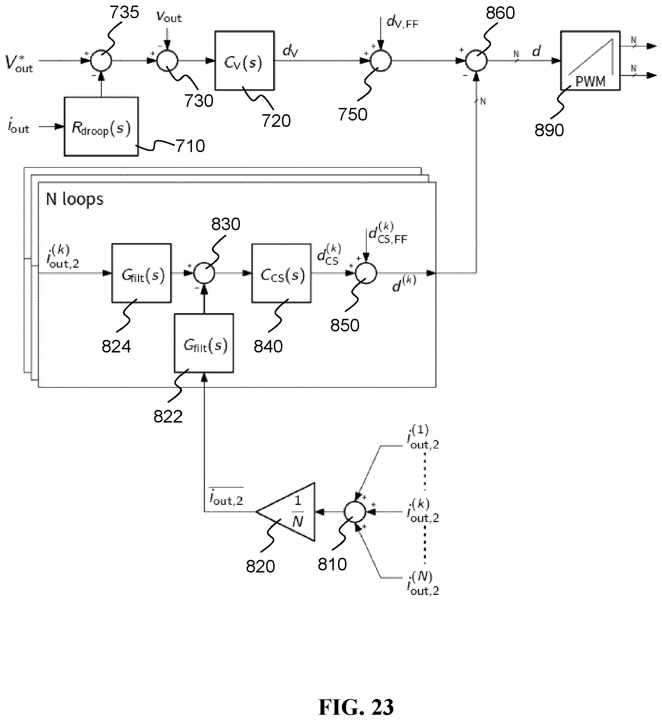

Fig. 23 is an example showing N instances of the current sharing control scheme illustrated in Fig. 22, combined with one instance of the output voltage control scheme illustrated in Fig. 20. Note that the subtractor 760 and the subtractor 860 are the same component, in this merged scheme. Likewise, the signal generator 790 and the signal generator 890 are the same component. The control scheme shown in Fig. 23 produces PWM control signals for the regulated PWM converters 220. This control scheme can be combined with the control scheme shown in Fig. 16 (for example) to provide a controller for the overall circuit of Fig. 5/ Fig. 14. It will be recalled that the control scheme of Fig. 16 can be used to control the regulated hybrid converters.

Current sensing can be used in examples according to the present disclosure for at least two purposes: firstly, to provide a feedback signal to the control loops described above; and secondly, to protect the system against short circuit events or any abnormal overload conditions. Currents can be either measured directly or estimated. In some examples, the sensing may comprise a combination of measurements and estimations.

In general, any suitable current sensing strategy may be used. The current sensing strategy may be lossy or lossless. Some examples of different current sensing strategies, which can be applied to both hybrid and PWM converters, will now be mentioned briefly, for completeness. However, these examples are neither exhaustive nor limiting.

Lossy methods include measuring the current(s) over a discrete shunt resistor or a shunt resistance realized by means of a PCB trace.

Lossless methods include DC resistance (DCR) sensing, $R_{DS}$ sensing over the MOSFETs, the use of electromagnetic transducers - for example Hall effect sensors or tunnel magnetoresistance (TMR) sensors. If integrated voltage regulator modules are used in the implementation of the hybrid converters and/or PWM converters, then integrated ISENSE functions of those integrated modules can be used to provide the current sensing for the present examples. Such modules may include, for example, DrMOSFETs, DrBridges or other integrated power stages.

According to one exemplary implementation, a circuit with the configuration shown in Fig. 14 comprises 4 phases. (That is, N=4.) In each phase (each power converter circuit 300-1, 300-k, 300-N), the regulated hybrid converter is a semi-resonant regulated converter ($L_m$ = 500 nH, $N_1$ = 8, $N_2$ = 1, $L_{r,nom}$ = 15 nH, $C_{r,nom}$ = 5 μF). The other regulated converter is a buck converter with TLVR coupling ($L_{buck}$ = 50 nH, $L_{TLVR}$ = 30 nH, 1:1). The input voltage $V_{in}$ is 54 V; the output voltage is 0.65 V. The output current is 400 A with a slew rate of 2000 A/μs. Output voltage control is based on a linear proportional-integral-derivative (PID) control algorithm, using duty modulation of the buck converter. Power sharing control is based on a linear PI control algorithm, with feed-forward, using frequency modulation of the semi-resonant hybrid converter with a constant-off time $T_{off}$ = 850 ns. Current sharing control is based on a linear PI control algorithm, using duty modulation of the buck converter.

The circuit was shown to exhibit imbalances in output currents between the hybrid converters of less than 3%, in response to positive and negative load steps. Simulations also show that the performance of the circuit is not sensitive to manufacturing tolerances of the components.

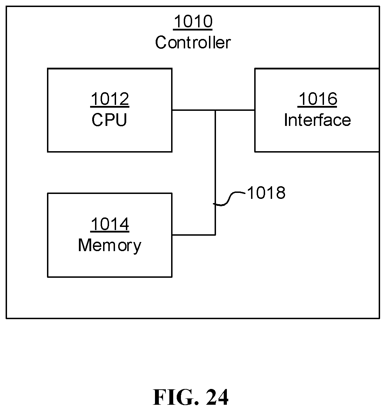

The control circuits described above (for example, with reference to Figs. 16-20, 22, and 23) may be implemented in any suitable form. In one implementation, the control circuit may be provided in the form of a digital controller. An exemplary digital controller 1010 is illustrated in the simplified block diagram of Fig. 24.

The controller 1010 comprises a central processing unit (CPU) 1012, a memory 1014, and an interface 1016. The CPU, the memory, and the interface are connected by one or more interconnects 1018. The CPU may also be referred to as a "processor".

The memory 1014 may store one or more computer programs (or software or code) and/or data. The computer programs stored in the memory may include an operating system for the CPU 1012 to execute in order for the controller 1010 to function. The computer programs stored in the memory 1014 may include computer programs according to examples of the present disclosure, or computer programs that, when executed by the CPU 1012, cause the CPU 1012 to carry out a method according to an example of the present disclosure.

The CPU 1012 may be any data processing unit suitable for executing one or more computer readable program instructions, such as those belonging to computer programs stored in the memory 1014. As part of the execution of one or more computer-readable program instructions, the CPU 1012 may store data to and/or read data from the memory 1014. The CPU 1012 may comprise a single data processing unit or multiple data processing units operating in parallel or in cooperation with each other.

The interface 1016 may provide the inputs to the controller (for example, for current and voltage measurements). The interface 1016 may comprise one or more analogue-to-digital converters (ADCs), for converting sensed analogue voltage or current signals into digital form for processing by the CPU 1012. The interface 1016 may further provide the outputs from the controller. The interface 1016 may comprise one or more digital-to-analogue converters (DACs), for converting signals or instructions in digital form into analogue pulse width modulated (PWM) control signals for the switching elements.

The CPU 1012 may communicate with the interface 1016 via the one or more interconnects 1018 to cause the interface 1016 to generate and output the PWM control signals. Similarly, the one or more interconnects 1018 may enable the CPU 1012 to operate on data (for example, current or voltage measurements) received by the controller 1010 via the interface 1016.

It should be noted that the above-mentioned embodiments illustrate rather than limit the present disclosure, and that those skilled in the art will be able to design many alternative examples without departing from the scope of the appended claims.

In the present implementation of the examples of Figs. 16-20, 22, and 23, the control logic is implemented as digital circuitry. However, in other examples, or other implementations of these examples, the control logic may instead be implemented using analog circuits. Those skilled in the art will be familiar with ways of generating PWM control signals for power converters, using either analogue or digital processing, or a mixture of both.

In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The embodiments may be implemented by means of hardware comprising several distinct elements. In a device claim enumerating several means, several of these means may be embodied by one and the same item of hardware. The mere fact that certain measures are recited in mutually different dependent claims does not indicate that a combination of these measures cannot be used to advantage. Furthermore in the appended claims lists comprising "at least one of: A; B; and C" should be interpreted as (A and/or B) and/or C.

Embodiments as discussed herein may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The following embodiments are disclosed:

1. A power converter circuit comprising:

a first regulated power converter having a first input and a first output; and
a second regulated power converter having a second input and a second output,
wherein the first input and the second input are configured to be coupled to a source, and the first output and the second output are configured to be coupled to a load;
wherein the first input and the second input are coupled in series, such that a first average current supplied from the source to the first input is equal to a second average current supplied from the source to the second input,
wherein the first output and the second output are coupled in parallel, such that a first voltage at the first output is equal to a second voltage at the second output,
wherein the first regulated power converter is a regulated hybrid converter configured to transfer energy from the first input to the first output through at least one magnetic component and at least one capacitive component.

2. The power converter circuit of embodiment 1, wherein the first regulated power converter is configured to:

during at least a first interval of a switching cycle, transfer energy from the source and store it at least in part as magnetic energy by any one of, or any combination of two or more of: (a) one or more inductors, (b) one or more coupled inductors, (c) a transformer, and (d) an autotransformer; and
during a second interval of the switching cycle, transfer the magnetic energy to the load.

3. The power converter circuit of embodiment 2, wherein the first regulated power converter is configured to:

during at least a third interval of the switching cycle, transfer energy from the source and store it at least in part as electric potential energy by one or more energy storage capacitors; and
during a fourth interval of the switching cycle, transfer the electric potential energy to the load.

4. The power converter circuit of embodiment 3, wherein the first regulated power converter is configured to, during the fourth interval, discharge the one or more energy storage capacitors through at least one inductor.

5. The power converter circuit of any one of the preceding embodiments, further comprising a further regulated power converter, having a third input and a third output, wherein the third input is configured to be coupled to the source and the third output is configured to be coupled to the load.

6. The power converter circuit of any one of the preceding embodiments, further comprising a further regulated hybrid converter, having a fourth input and a fourth output, wherein the fourth input is configured to be coupled to the source and the fourth output is configured to be coupled to the load.

7. The power converter circuit of any one of the preceding embodiments, wherein the first regulated power converter comprises a semi-resonant hybrid converter.

8. The power converter circuit of any one of the preceding embodiments, wherein the second regulated power converter comprises one of: (i) a buck converter and (ii) a regulated hybrid converter, optionally a semi-resonant hybrid converter.

9. The power converter circuit of any one of the preceding embodiments, further comprising a reservoir capacitor ($C_c$), wherein the reservoir capacitor ($C_c$) is configured to receive energy from the first regulated power converter, and wherein the second regulated power converter is configured to receive energy from the reservoir capacitor ($C_c$) at the second input.

10. A circuit comprising:

a first power converter circuit according to any one of the preceding embodiments; and
a second power converter circuit according to any one of the preceding embodiments,
wherein an input of the first power converter circuit is coupled in parallel with an input of the second power converter circuit, and
an output of the first power converter circuit is coupled in parallel with an output of the second power converter circuit.

11. The circuit of embodiment 10, further comprising a trans-inductor voltage regulator, hereinafter TLVR, connection between the first power converter circuit and the second power converter circuit.

12. The circuit of embodiment 10 or embodiment 11, wherein each of the first power converter circuit and the second power converter circuit comprises one or more switching elements operated in a switching cycle,
the circuit further comprising a controller, wherein the controller is configured to control the switching elements of the first power converter circuit and the second power converter circuit to operate in different phases.

13. The circuit of embodiment 12, wherein the controller comprises a power sharing control loop configured to:

obtain a first voltage set point, wherein the first voltage set point is based on a desired average of voltages at all first inputs of the respective power converter circuits;
obtain a measured first voltage, wherein the measured first voltage is indicative of an average of the voltages at all said first inputs; and
control the switching elements to reduce an error between the first voltage set point and the measured output voltage.

14. The circuit of embodiment 13, wherein the controller is configured to control the switching elements of

the first regulated power converter of the first power converter circuit and
the first regulated power converter of the second power converter circuit,
based at least in part on a result of a comparison between the first voltage set point and the measured first voltage.

15. The circuit of embodiment 13, wherein the controller is configured to control the switching elements of

the second regulated power converter of the first power converter circuit and
the second regulated power converter of the second power converter circuit,
based at least in part on a result of a comparison between the first voltage set point and the measured first voltage.

16. The circuit of embodiment 12, wherein the controller comprises a power sharing control loop configured to:

obtain a second voltage set point, wherein the second voltage set point is based on a desired average of voltages at all second inputs of the respective power converter circuits;
obtain a measured second voltage, wherein the measured second voltage is indicative of an average of the voltages at all said second inputs; and
control the switching elements to reduce an error between the second voltage set point and the measured second voltage.

17. The circuit of embodiment 16, wherein the controller is configured to control the switching elements of

the first regulated power converter of the first power converter circuit and
the first regulated power converter of the second power converter circuit,
based at least in part on a result of a comparison between the second voltage set point and the measured second voltage.

18. The circuit of embodiment 16, wherein the controller is configured to control the switching elements of

the second regulated power converter of the first power converter circuit and
the second regulated power converter of the second power converter circuit,
based at least in part on a result of a comparison between the second voltage set point and the measured second voltage.

19. The circuit of any one of embodiments 12 to 18, wherein the controller comprises, for each of (i) the first power converter circuit and (ii) the second power converter circuit,
a load current sharing control loop configured to minimise a difference between an output current of the second regulated power converter of that power converter circuit and an average output current of all second regulated power converters.

20. The circuit of any one of embodiments 12 to 19, wherein the controller comprises an output voltage control loop configured to:

obtain an output voltage set point, being a desired output voltage of the circuit;
obtain a measured output voltage of the circuit; and
control the switching elements to reduce an error between the output voltage set point and the measured output voltage,
wherein the controller is configured to control the switching elements of

the second regulated power converter of the first power converter circuit and
the second regulated power converter of the second power converter circuit,

based at least in part on a result of a comparison between the output voltage set point and the measured output voltage.

**Claims**

1. A power converter circuit (100, 200) comprising:

   a first regulated power converter (110, 210) having a first input and a first output; and
   a second regulated power converter (120, 220) having a second input and a second output,
   wherein the first input and the second input are configured to be coupled to a source, and the first output and the second output are configured to be coupled to a load;
   wherein the first input and the second input are coupled in series, such that a first average current supplied from the source to the first input is equal to a second average current supplied from the source to the second input,
   wherein the first output and the second output are coupled in parallel, such that a first voltage at the first output is equal to a second voltage at the second output,
   wherein the first regulated power converter (110, 210) is a regulated hybrid converter configured to transfer energy from the first input to the first output through at least one magnetic component and at least one capacitive component.

2. The power converter circuit of claim 1, wherein the first regulated power converter (110, 210) is configured to:

   during at least a first interval of a switching cycle, transfer energy from the source and store it at least in part as magnetic energy by any one of, or any combination of two or more of: (a) one or more inductors, (b) one or more coupled inductors, (c) a transformer, and (d) an autotransformer; and
   during a second interval of the switching cycle, transfer the magnetic energy to the load.

3. The power converter circuit of claim 2, wherein the first regulated power converter (110, 210) is configured to:

   during at least a third interval of the switching cycle, transfer energy from the source and store it at least in part as electric potential energy by one or more energy storage capacitors; and
   during a fourth interval of the switching cycle, transfer the electric potential energy to the load.

4. The power converter circuit of claim 3, wherein the first regulated power converter (110) is configured to, during the fourth interval, discharge the one or more energy storage capacitors through at least one inductor.

5. The power converter circuit of any one of the preceding claims, further comprising a further regulated power converter, having a third input and a third output, wherein the third input is configured to be coupled to the source and the third output is configured to be coupled to the load.

6. The power converter circuit of any one of the preceding claims, further comprising a further regulated hybrid converter, having a fourth input and a fourth output, wherein the fourth input is configured to be coupled to the source and the fourth output is configured to be coupled to the load.

7. The power converter circuit of any one of the preceding claims, wherein the first regulated power converter comprises a semi-resonant hybrid converter.

8. The power converter circuit of any one of the preceding claims, wherein the second regulated power converter comprises one of: (i) a buck converter and (ii) a regulated hybrid converter, optionally a semi-resonant hybrid converter.

9. The power converter circuit of any one of the preceding claims, further comprising a reservoir capacitor ($C_c$), wherein the reservoir capacitor ($C_c$) is configured to receive energy from the first regulated power converter, and wherein the second regulated power converter is configured to receive energy from the reservoir capacitor ($C_c$) at the second input.

10. A circuit comprising:

    a first power converter circuit (200-1) according to any one of the preceding claims; and
    a second power converter circuit (200-k) according to any one of the preceding claims,
    wherein an input of the first power converter circuit (200-1) is coupled in parallel with an input of the second power converter circuit (200-k), and
    an output of the first power converter circuit (200-1) is coupled in parallel with an output of the second power converter circuit (200-k).

11. The circuit of claim 10, wherein each of the first power converter circuit and the second power converter circuit comprises one or more switching elements operated in a switching cycle,
    the circuit further comprising a controller, wherein the controller is configured to control the switching elements of the first power converter circuit and the second power converter circuit to operate in different phases.

12. The circuit of claim 11, wherein the controller comprises a power sharing control loop configured to:

    obtain a second voltage set point, wherein the second voltage set point is based on a desired average of voltages at all second inputs of the respective power converter circuits;
    obtain a measured second voltage, wherein the measured second voltage is indicative of an average of the voltages at all said second inputs; and
    control the switching elements to reduce an error between the second voltage set point and the measured second voltage.

13. The circuit of claim 12, wherein the controller is configured to control the switching elements of

    the first regulated power converter of the first power converter circuit and
    the first regulated power converter of the second power converter circuit,
    based at least in part on a result of a comparison between the second voltage set point and the measured second voltage.

14. The circuit of any one of claims 11 to 13, wherein the controller comprises, for each of (i) the first power converter circuit and (ii) the second power converter circuit,
    a load current sharing control loop configured to minimise a difference between an output current of the second regulated power converter of that power converter circuit and an average output current of all second regulated power converters.

15. The circuit of any one of claims 11 to 14, wherein the controller comprises an output voltage control loop configured to:

    obtain an output voltage set point, being a desired output voltage of the circuit;
    obtain a measured output voltage of the circuit; and
    control the switching elements to reduce an error between the output voltage set point and the measured output voltage,

wherein the controller is configured to control the switching elements of

the second regulated power converter of the first power converter circuit and
the second regulated power converter of the second power converter circuit,

based at least in part on a result of a comparison between the output voltage set point and the measured output voltage.

**FIG. 1**

**FIG. 2**

**FIG. 3**

**FIG. 4A**

**FIG. 4B**

**FIG. 5**

**FIG. 6**

**FIG. 7**

**FIG. 8A**

**FIG. 8B**

**FIG. 9**

**FIG. 10A**

FIG. 10B

FIG. 11A

FIG. 11B

**FIG. 12A**

EP 4 657 726 A1

**FIG. 12B**

**FIG. 13**

EP 4 657 726 A1

**FIG. 14**

**FIG. 15**

**FIG. 16**

EP 4 657 726 A1

FIG. 17

50

FIG. 18

FIG. 19

**FIG. 20**

**FIG. 21**

EP 4 657 726 A1

**FIG. 22**

**FIG. 23**

**FIG. 24**

# EP 4 657 726 A1

| | Europäisches Patentamt  European Patent Office  Office européen des brevets | **EUROPEAN SEARCH REPORT** | **Application Number**  EP 24 17 8515 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 345 895 A (UESTC) 27 June 2023 (2023-06-27) * abstract * * * figures 1-3 * ----- | 1-15 | INV. H02M1/00 H02M3/00 H02M3/158 |
| A | US 2019/386566 A1 (ZHANG WANG [CN] ET AL) 19 December 2019 (2019-12-19) * abstract * * * page 8 * ----- | 1-15 | |
| A | GUAN YUESHI ET AL: "Review of High-Frequency High-Voltage-Conversion-Ratio DC-DC Converters", IEEE JOURNAL OF EMERGING AND SELECTED TOPICS IN INDUSTRIAL ELECTRONICS, IEEE, vol. 2, no. 4, 14 January 2021 (2021-01-14), pages 374-389, XP011879613, ISSN: 2687-9735, DOI: 10.1109/JESTIE.2021.3051554 [retrieved on 2021-09-22] * Section IIA; figure 4 * * figure 7(b) * ----- | 1-15 | TECHNICAL FIELDS SEARCHED (IPC)  H02M |

The present search report has been drawn up for all claims

| Place of search  The Hague | Date of completion of the search  4 November 2024 | Examiner  Standaert, Frans |
|---|---|---|

EPO FORM 1503 03.82 (P04C01)

EP 4 657 726 A1

## ANNEX TO THE EUROPEAN SEARCH REPORT
## ON EUROPEAN PATENT APPLICATION NO.

EP 24 17 8515

04-11-2024

| Patent document cited in search report | Publication date | Patent family member(s) | Publication date |
|---|---|---|---|
| CN 116345895 A | 27-06-2023 | NONE | |
| US 2019386566 A1 | 19-12-2019 | CN 108736709 A | 02-11-2018 |
| | | EP 3582383 A2 | 18-12-2019 |
| | | TW 202002485 A | 01-01-2020 |
| | | US 2019386566 A1 | 19-12-2019 |
| | | US 2021083580 A1 | 18-03-2021 |

EPO FORM P0459

**REFERENCES CITED IN THE DESCRIPTION**

**Non-patent literature cited in the description**

- **S. LUO** ; **Z. YE** ; **R.-L. LIN** ; **F. LEE**. A classification and evaluation of paralleling methods for power supply modules. *30th Annual IEEE Power Electronics Specialists Conference, Charleston, SC, USA*, 1999